# EUROPEAN PATENT APPLICATION

(11) **EP 4 590 046 A1**
(43) Date of publication of application: **23.07.2025**
(21) Application number: 23878992.9
(22) Date of filing: 10.10.2023
(51) Int. Cl.: H04W 72/0453

(54) **COMMUNICATION METHOD, APPARATUS AND SYSTEM**

(30) Priority: 21.10.2022 CN 202211297967
(71) Applicant: Huawei Technologies Co., Ltd., Shenzhen, Guangdong 518129 (CN)
(72) Inventor: QU, Weilin, Shenzhen, Guangdong 518129 (CN); WU, Yiling, Shenzhen, Guangdong 518129 (CN); JIN, Zhe, Shenzhen, Guangdong 518129 (CN); LI, Hantao, Shenzhen, Guangdong 518129 (CN)
(74) Representative: Isarpatent
(86) International application number: PCT/CN2023/123777
(87) International publication number: WO 2024/083000

(57) **Abstract**

Embodiments of this application provide a communication method, apparatus, and system, to implement scheduling of a frequency domain resource of an uplink signal by a network device. The method includes: The network device receives first information from a first terminal device, where the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located. The network device determines second information based on the first information, and sends the second information to the first terminal device, where the second information indicates a frequency domain resource used by the first terminal device to send a first uplink signal.

## Description

This application claims priority to Chinese Patent Application No. 202211297967.1, filed with the China National Intellectual Property Administration on October 21, 2022 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

To reduce power consumption of a terminal device, passive internet of things (passive IoT)/backscatter (backscatter) communication emerges. In a passive internet of things/backscatter communication process, the terminal device may not include a power supply circuit or device, and obtains an energy supply only by receiving a downlink radio frequency signal sent by a network device and obtaining a direct current voltage through a series of circuits such as a filter circuit, to demodulate a subsequent downlink signal and subsequently reflect an uplink signal to the network device.

In the conventional technology, there are terminal devices with different capabilities, and the terminal devices may send uplink signals with different frequency offsets relative to a center frequency of a downlink signal. For example, some terminal devices can send uplink signals only on a carrier on which the downlink signal is located, and some terminal devices may send uplink signals on a carrier different from the carrier on which the downlink signal is located. In addition, the different capabilities of the terminal devices may also be reflected in that the terminal devices each may generate a double-sideband uplink signal, but some terminal devices may further generate single-sideband uplink signals because they have in-phase quadrature (in-phase quadrature, IQ) circuits or filter circuits.

If a plurality of terminal devices with different capabilities access a same network device, how the network device schedules a frequency domain resource of an uplink signal to accommodate as many terminal devices with different capabilities as possible is an urgent problem to be resolved.

### SUMMARY

Embodiments of this application provide a communication method, apparatus, and system, to implement scheduling of a frequency domain resource of an uplink signal by a network device.

To achieve the foregoing objectives, the following technical solutions are used in embodiments of this application.

According to a first aspect, a communication method is provided, and an apparatus for performing the communication method may be a network device, or may be a module used in a network device, for example, a chip or a chip system. The following uses an example in which an execution body is the network device for description. The network device receives first information from a first terminal device, where the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located. The network device determines second information based on the first information, and sends the second information to the first terminal device, where the second information indicates a frequency domain resource used by the first terminal device to send a first uplink signal. The first uplink signal is a signal obtained through modulating the first downlink signal by the first terminal device, or the first uplink signal is a signal generated by the first terminal device.

In embodiments of this application, the network device may allocate, to the first terminal device based on the first information that is reported by the first terminal device and that indicates that the first terminal device has the capability of sending the uplink signal on the first carrier, a frequency domain resource that satisfies the capability of the first terminal device and that is used to send the first uplink signal. When there are a plurality of first terminal devices, the network device may flexibly schedule frequency domain resources for transmitting a plurality of first uplink signals, so that the frequency domain resources for the plurality of first uplink signals do not overlap, and as many first terminal devices as possible with different capabilities can be accommodated, to maximize an uplink transmission capacity. In addition, the center frequency of the uplink signal is different from the center frequency of the first downlink signal. Therefore, when the network device demodulates the first uplink signal, a problem of cochannel interference caused by sending the first downlink signal can be avoided, to help improve coverage of an uplink.

With reference to the first aspect, in a possible implementation, that the first terminal device has a capability of sending an uplink signal on the first carrier includes: The first terminal device has a capability of sending the uplink signal at a first frequency domain location that is greater than the center frequency of the first downlink signal on the first carrier and a second frequency domain location that is less than the center frequency of the first downlink signal on the first carrier, where a value of a frequency domain offset between the first frequency domain location and a center frequency of the first carrier is the same as a value of a frequency domain offset between the second frequency domain location and the center frequency of the first carrier, or the first terminal device has a capability of sending the uplink signal at the first frequency domain location or the second frequency domain location on the first carrier. In this solution, because there is a specific frequency spacing between the first downlink signal and the uplink signal, a duplex interference problem generated in a process of communication between the network device and the first terminal device can be avoided to some extent. This helps improve coverage performance of an uplink signal sent by the first terminal device. In addition, the uplink signal occupies only one frequency domain location, and spectral efficiency of the uplink signal is doubled. This helps support more terminal devices to simultaneously send uplink signals on a same frequency domain resource, and improve a system capacity.

With reference to the first aspect, in a possible implementation, the first carrier is the carrier that is in the same frequency band as the carrier on which the first downlink signal is located and whose center frequency is different from the center frequency of the carrier on which the first downlink signal is located. That the first terminal device has a capability of sending an uplink signal on the first carrier includes: The first terminal device has a capability of sending the uplink signal on the first carrier whose frequency is a first frequency offset greater than the center frequency of the carrier on which the first downlink signal is located and the first carrier whose frequency is a second frequency offset less than the center frequency of the carrier on which the first downlink signal is located, where the first frequency offset and the second frequency offset are frequency offsets between center frequencies of the first carriers and the center frequency of the carrier on which the first downlink signal is located, and values of the first frequency offset and the second frequency offset are the same; or the first terminal device has a capability of sending the uplink signal on the first carrier at the first frequency offset or the second frequency offset. In this solution, a problem of duplex interference generated in a process of communication between the network device and the first terminal device can be better avoided. This helps improve coverage performance of an uplink signal sent by the first terminal device. In addition, in this solution, an uplink spectrum resource can be effectively used, and more terminal devices are supported to simultaneously send uplink signals. This helps improve spectrum resource utilization and increase an uplink transmission system capacity.

With reference to the first aspect, in a possible implementation, the value of the frequency offset between the center frequency of the first carrier and the center frequency of the carrier on which the first downlink signal is located is less than or equal to a first threshold.

With reference to the first aspect, in a possible implementation, the first carrier is the carrier that is located on the frequency band different from that of the carrier on which the first downlink signal is located. That the first terminal device has a capability of sending an uplink signal on the first carrier includes: The first terminal device has a capability of sending the uplink signal on the first carrier in an uplink frequency band of one or more frequency ranges, or the first terminal device has a capability of sending the uplink signal on the first carrier in a frequency band at one or more frequency spacings relative to a frequency band of the carrier on which the first downlink signal is located. In this solution, a frequency spacing or a frequency offset between the first downlink signal and the uplink signal is large, and is an inter-band frequency spacing. In this solution, a problem of duplex interference generated in a process of communication between the network device and the first terminal device can be completely avoided. This helps improve coverage performance of an uplink signal sent by the first terminal device. In addition, in this solution, a spectrum resource of an uplink frequency range of an LTE or NR cellular network can be effectively used, so that sending of an uplink signal complies with a related protocol of the cellular network.

With reference to the first aspect, in a possible implementation, the frequency band on which the carrier of the first downlink signal is located and the frequency band on which the first carrier is located are two frequency bands of a frequency division duplexing frequency range.

With reference to the first aspect, in a possible implementation, the first information is carried in a message Msg1 or Msg3 that is sent by the first terminal device in a random access process.

With reference to the first aspect, in a possible implementation, the second information includes at least one of the following: a quantity of frequency domain locations occupied by the first uplink signal, a frequency offset between the first uplink signal and the first downlink signal, a frequency offset between the center frequency of the first carrier and the center frequency of the carrier on which the first downlink signal is located, or a bandwidth of the first uplink signal. In this solution, information included in the second information may be used by the first terminal device to determine a frequency domain location and a frequency domain bandwidth of the first uplink signal, that is, determine a frequency domain resource occupied by the first uplink signal.

With reference to the first aspect, in a possible implementation, the second information is carried in a paging message, Msg4 in a random access process, downlink control information DCI, a signal carrying a broadcast message, a preamble signal, a reference signal, or a calibration signal.

With reference to the first aspect, in a possible implementation, the second information indicates a frequency domain location and a frequency domain bandwidth that are of the first uplink signal on the first carrier. The second information includes modulation and coding scheme MCS information and/or a quantity of frequency domain locations occupied by the first uplink signal. The quantity of frequency domain locations occupied by the first uplink signal is 1 or 2, and the MCS information is used by the first terminal device to determine a value of a frequency offset between the first frequency domain location and/or the second frequency domain location and the center frequency of the first downlink signal, and the bandwidth of the first uplink signal.

With reference to the first aspect, in a possible implementation, the MCS information includes a value of a line code or spreading code factor of the first uplink signal, and/or a modulation symbol length of the first uplink signal.

With reference to the first aspect, in a possible implementation, the second information further indicates a frequency domain location of the first carrier, and the second information further includes the frequency offset between the center frequency of the first carrier and the center frequency of the carrier on which the first downlink signal is located. The center frequency of the first carrier is a frequency that is in the frequency band of the carrier on which the first downlink signal is located and that is the first frequency offset greater than the center frequency of the carrier on which the first downlink signal is located or the second frequency offset less than the center frequency of the carrier on which the first downlink signal is located, or the center frequency of the first carrier is frequencies that are in the frequency band of the carrier on which the first downlink signal is located and that are the first frequency offset greater than the center frequency of the carrier on which the first downlink signal is located and the second frequency offset less than the center frequency of the carrier on which the first downlink signal is located, or the first carrier is located in an uplink frequency band of one or more frequency ranges, or the first carrier is located in a frequency band that is different from and that is one or more frequency spacings from the frequency band of the carrier on which the first downlink signal is located.

According to a second aspect, a communication method is provided. An apparatus for performing the communication method may be a first terminal device, or may be a module used in a first terminal device, for example, a chip or a chip system. The following uses an example in which an execution body is the first terminal device for description. The first terminal device sends first information to a network device, where the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located. The first terminal device receives second information from the network device, and sends a first uplink signal to the network device on a frequency domain resource indicated by the second information, where the first uplink signal is a signal obtained through modulating the first downlink signal by the first terminal device, or the first uplink signal is a signal generated by the first terminal device.

With reference to the second aspect, in a possible implementation, that the first terminal device has a capability of sending an uplink signal on the first carrier includes: The first terminal device has a capability of sending the uplink signal at a first frequency domain location that is greater than the center frequency of the first downlink signal on the first carrier and a second frequency domain location that is less than the center frequency of the first downlink signal on the first carrier, where a value of a frequency domain offset between the first frequency domain location and a center frequency of the first carrier is the same as a value of a frequency domain offset between the second frequency domain location and the center frequency of the first carrier; or the first terminal device has a capability of sending the uplink signal at the first frequency domain location or the second frequency domain location on the first carrier.

With reference to the second aspect, in a possible implementation, the first carrier is the carrier that is in the same frequency band as the carrier on which the first downlink signal is located and whose center frequency is different from the center frequency of the carrier on which the first downlink signal is located. That the first terminal device has a capability of sending an uplink signal on the first carrier includes: The first terminal device has a capability of sending the uplink signal on the first carrier whose frequency is a first frequency offset greater than the center frequency of the carrier on which the first downlink signal is located and the first carrier whose frequency is a second frequency offset less than the center frequency of the carrier on which the first downlink signal is located, where the first frequency offset and the second frequency offset are frequency offsets between center frequencies of the first carriers and the center frequency of the carrier on which the first downlink signal is located, and values of the first frequency offset and the second frequency offset are the same; or the first terminal device has a capability of sending the uplink signal on the first carrier at the first frequency offset or the second frequency offset.

With reference to the second aspect, in a possible implementation, the values of the first frequency offset and the second frequency offset are less than or equal to a first threshold.

With reference to the second aspect, in a possible implementation, the first carrier is the carrier that is located on the frequency band different from that of the carrier on which the first downlink signal is located. That the first terminal device has a capability of sending an uplink signal on the first carrier includes: The first terminal device has a capability of sending the uplink signal on the first carrier in an uplink frequency band of one or more frequency ranges, or the first terminal device has a capability of sending the uplink signal on the first carrier in a frequency band at one or more frequency spacings relative to a frequency band of the carrier on which the first downlink signal is located.

With reference to the second aspect, in a possible implementation, the frequency band on which the carrier of the first downlink signal is located and the frequency band on which the first carrier is located are two frequency bands of a frequency division duplexing frequency range.

With reference to the second aspect, in a possible implementation, the first information is carried in a message Msg1 or Msg3 that is sent by the first terminal device in a random access process.

With reference to the second aspect, in a possible implementation, the second information includes at least one of the following: a quantity of frequency domain locations occupied by the first uplink signal, a frequency offset between the first uplink signal and the first downlink signal, a frequency offset between the center frequency of the first carrier and the center frequency of the carrier on which the first downlink signal is located, or a bandwidth of the first uplink signal.

With reference to the second aspect, in a possible implementation, the second information is carried in a paging message, Msg4 in a random access process, downlink control information DCI, a signal carrying a broadcast message, a preamble signal, a reference signal, or a calibration signal.

With reference to the second aspect, in a possible implementation, the second information indicates a frequency domain location and a frequency domain bandwidth that are of the first uplink signal on the first carrier. The second information includes modulation and coding scheme MCS information and/or a quantity of frequency domain locations occupied by the first uplink signal. The quantity of frequency domain locations occupied by the first uplink signal is 1 or 2, and the MCS information is used by the first terminal device to determine a value of a frequency offset between the first frequency domain location and/or the second frequency domain location and the center frequency of the first downlink signal, and the bandwidth of the first uplink signal.

With reference to the second aspect, in a possible implementation, the MCS information includes a value of a line code or spreading code factor of the first uplink signal, and/or a modulation symbol length of the first uplink signal.

With reference to the second aspect, in a possible implementation, the second information further indicates a frequency domain location of the first carrier, and the second information further includes the frequency offset between the center frequency of the first carrier and the center frequency of the carrier on which the first downlink signal is located. The center frequency of the first carrier is a frequency that is in the frequency band of the carrier on which the first downlink signal is located and that is the first frequency offset greater than the center frequency of the carrier on which the first downlink signal is located or the second frequency offset less than the center frequency of the carrier on which the first downlink signal is located, or the center frequency of the first carrier is frequencies that are in the frequency band of the carrier on which the first downlink signal is located and that are the first frequency offset greater than the center frequency of the carrier on which the first downlink signal is located and the second frequency offset less than the center frequency of the carrier on which the first downlink signal is located, or the first carrier is located in an uplink frequency band of one or more frequency ranges; or the first carrier is located in a frequency band that is different from and that is one or more frequency spacings from the frequency band of the carrier on which the first downlink signal is located.

According to a third aspect, a communication apparatus is provided, to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the network device includes a transceiver module and a processing module. The transceiver module is configured to receive first information from a first terminal device, where the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located. The processing module is configured to determine second information based on the first information. The processing module is configured to determine second information based on the first information, where the second information indicates a frequency domain resource used by the first terminal device to send a first uplink signal, and the first uplink signal is a signal obtained through modulating the first downlink signal by the first terminal device, or the first uplink signal is a signal generated by the first terminal device. The transceiver module is further configured to send the second information to the first terminal device.

With reference to the third aspect, in a possible implementation, that the first terminal device has a capability of sending an uplink signal on the first carrier includes: The first terminal device has a capability of sending the uplink signal at a first frequency domain location that is greater than the center frequency of the first downlink signal on the first carrier and a second frequency domain location that is less than the center frequency of the first downlink signal on the first carrier, where a value of a frequency domain offset between the first frequency domain location and a center frequency of the first carrier is the same as a value of a frequency domain offset between the second frequency domain location and the center frequency of the first carrier; or the first terminal device has a capability of sending the uplink signal at the first frequency domain location or the second frequency domain location on the first carrier.

With reference to the third aspect, in a possible implementation, the first carrier is the carrier that is in the same frequency band as the carrier on which the first downlink signal is located and whose center frequency is different from the center frequency of the carrier on which the first downlink signal is located. That the first terminal device has a capability of sending an uplink signal on the first carrier includes: The first terminal device has a capability of sending the uplink signal on the first carrier whose frequency is a first frequency offset greater than the center frequency of the carrier on which the first downlink signal is located and the first carrier whose frequency is a second frequency offset less than the center frequency of the carrier on which the first downlink signal is located, where the first frequency offset and the second frequency offset are frequency offsets between center frequencies of the first carriers and the center frequency of the carrier on which the first downlink signal is located, and values of the first frequency offset and the second frequency offset are the same; or the first terminal device has a capability of sending the uplink signal on the first carrier at the first frequency offset or the second frequency offset.

With reference to the third aspect, in a possible implementation, the values of the first frequency offset and the second frequency offset are less than or equal to a first threshold.

With reference to the third aspect, in a possible implementation, the first carrier is the carrier that is located on the frequency band different from that of the carrier on which the first downlink signal is located. That the first terminal device has a capability of sending an uplink signal on the first carrier includes: The first terminal device has a capability of sending the uplink signal on the first carrier in an uplink frequency band of one or more frequency ranges, or the first terminal device has a capability of sending the uplink signal on the first carrier in a frequency band at one or more frequency spacings relative to a frequency band of the carrier on which the first downlink signal is located.

With reference to the third aspect, in a possible implementation, the frequency band on which the carrier of the first downlink signal is located and the frequency band on which the first carrier is located are two frequency bands of a frequency division duplexing frequency range.

With reference to the third aspect, in a possible implementation, the first information is carried in a message Msg1 or Msg3 that is sent by the first terminal device in a random access process.

With reference to the third aspect, in a possible implementation, the second information includes at least one of the following: a line code rate, a quantity of frequency domain locations occupied by the first uplink signal, a frequency offset between the first uplink signal and the first downlink signal, a frequency offset between the center frequency of the first carrier and the center frequency of the carrier on which the first downlink signal is located, or a bandwidth of the first uplink signal.

With reference to the third aspect, in a possible implementation, the second information is carried in a paging message, Msg4 in a random access process, downlink control information DCI, a signal carrying a broadcast message, a preamble signal, a reference signal, or a calibration signal.

With reference to the third aspect, in a possible implementation, the second information indicates a frequency domain location and a frequency domain bandwidth that are of the first uplink signal on the first carrier. The second information includes modulation and coding scheme MCS information and/or a quantity of frequency domain locations occupied by the first uplink signal. The quantity of frequency domain locations occupied by the first uplink signal is 1 or 2, and the MCS information is used by the first terminal device to determine a value of a frequency offset between the first frequency domain location and/or the second frequency domain location and the center frequency of the first downlink signal, and the bandwidth of the first uplink signal.

With reference to the third aspect, in a possible implementation, the MCS information includes a value of a line code or spreading code factor of the first uplink signal, and/or a modulation symbol length of the first uplink signal.

With reference to the third aspect, in a possible implementation, the second information further indicates a frequency domain location of the first carrier, and the second information further includes the frequency offset between the center frequency of the first carrier and the center frequency of the carrier on which the first downlink signal is located. The center frequency of the first carrier is a frequency that is in the frequency band of the carrier on which the first downlink signal is located and that is the first frequency offset greater than the center frequency of the carrier on which the first downlink signal is located or the second frequency offset less than the center frequency of the carrier on which the first downlink signal is located, or the center frequency of the first carrier is frequencies that are in the frequency band of the carrier on which the first downlink signal is located and that are the first frequency offset greater than the center frequency of the carrier on which the first downlink signal is located and the second frequency offset less than the center frequency of the carrier on which the first downlink signal is located, or the first carrier is located in an uplink frequency band of one or more frequency ranges, or the first carrier is located in a frequency band that is different from and that is one or more frequency spacings from the frequency band of the carrier on which the first downlink signal is located.

According to a fourth aspect, a communication apparatus is provided, to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the communication apparatus includes a transceiver module. The transceiver module is configured to send first information to a network device, where the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located. The transceiver module is further configured to receive second information from the network device, and send a first uplink signal to the network device on a frequency domain resource indicated by the second information, where the first uplink signal is a signal obtained through modulating the first downlink signal by the first terminal device, or the first uplink signal is a signal generated by the first terminal device.

With reference to the fourth aspect, in a possible implementation, that the first terminal device has a capability of sending an uplink signal on the first carrier includes: The first terminal device has a capability of sending the uplink signal at a first frequency domain location that is greater than the center frequency of the first downlink signal on the first carrier and a second frequency domain location that is less than the center frequency of the first downlink signal on the first carrier, where a value of a frequency domain offset between the first frequency domain location and a center frequency of the first carrier is the same as a value of a frequency domain offset between the second frequency domain location and the center frequency of the first carrier; or the first terminal device has a capability of sending the uplink signal at the first frequency domain location or the second frequency domain location on the first carrier.

With reference to the fourth aspect, in a possible implementation, the first carrier is the carrier that is in the same frequency band as the carrier on which the first downlink signal is located and whose center frequency is different from the center frequency of the carrier on which the first downlink signal is located. That the first terminal device has a capability of sending an uplink signal on the first carrier includes: The first terminal device has a capability of sending the uplink signal on the first carrier whose frequency is a first frequency offset greater than the center frequency of the carrier on which the first downlink signal is located and the first carrier whose frequency is a second frequency offset less than the center frequency of the carrier on which the first downlink signal is located, where the first frequency offset and the second frequency offset are frequency offsets between center frequencies of the first carriers and the center frequency of the carrier on which the first downlink signal is located, and values of the first frequency offset and the second frequency offset are the same; or the first terminal device has a capability of sending the uplink signal on the first carrier at the first frequency offset or the second frequency offset.

With reference to the fourth aspect, in a possible implementation, the values of the first frequency offset and the second frequency offset are less than or equal to a first threshold.

With reference to the fourth aspect, in a possible implementation, the first carrier is the carrier that is located on the frequency band different from that of the carrier on which the first downlink signal is located. That the first terminal device has a capability of sending an uplink signal on the first carrier includes: The first terminal device has a capability of sending the uplink signal on the first carrier in an uplink frequency band of one or more frequency ranges, or the first terminal device has a capability of sending the uplink signal on the first carrier in a frequency band at one or more frequency spacings relative to a frequency band of the carrier on which the first downlink signal is located.

With reference to the fourth aspect, in a possible implementation, the frequency band on which the carrier of the first downlink signal is located and the frequency band on which the first carrier is located are two frequency bands of a frequency division duplexing frequency range.

With reference to the fourth aspect, in a possible implementation, the first information is carried in a message Msg1 or Msg3 that is sent by the first terminal device in a random access process.

With reference to the fourth aspect, in a possible implementation, the second information includes at least one of the following: a quantity of frequency domain locations occupied by the first uplink signal, a frequency offset between the first uplink signal and the first downlink signal, a frequency offset between the center frequency of the first carrier and the center frequency of the carrier on which the first downlink signal is located, or a bandwidth of the first uplink signal.

With reference to the fourth aspect, in a possible implementation, the second information is carried in a paging message, Msg4 in a random access process, downlink control information DCI, a signal carrying a broadcast message, a preamble signal, a reference signal, or a calibration signal.

With reference to the fourth aspect, in a possible implementation, the second information indicates a frequency domain location and a frequency domain bandwidth that are of the first uplink signal on the first carrier. The second information includes modulation and coding scheme MCS information and/or a quantity of frequency domain locations occupied by the first uplink signal. The quantity of frequency domain locations occupied by the first uplink signal is 1 or 2, and the MCS information is used by the first terminal device to determine a value of a frequency offset between the first frequency domain location and/or the second frequency domain location and the center frequency of the first downlink signal, and the bandwidth of the first uplink signal.

With reference to the fourth aspect, in a possible implementation, the MCS information includes a value of a line code or spreading code factor of the first uplink signal, and/or a modulation symbol length of the first uplink signal.

With reference to the fourth aspect, in a possible implementation, the second information further indicates a frequency domain location of the first carrier, and the second information further includes the frequency offset between the center frequency of the first carrier and the center frequency of the carrier on which the first downlink signal is located. The center frequency of the first carrier is a frequency that is in the frequency band of the carrier on which the first downlink signal is located and that is the first frequency offset greater than the center frequency of the carrier on which the first downlink signal is located or the second frequency offset less than the center frequency of the carrier on which the first downlink signal is located, or the center frequency of the first carrier is frequencies that are in the frequency band of the carrier on which the first downlink signal is located and that are the first frequency offset greater than the center frequency of the carrier on which the first downlink signal is located and the second frequency offset less than the center frequency of the carrier on which the first downlink signal is located, or the first carrier is located in an uplink frequency band of one or more frequency ranges; or the first carrier is located in a frequency band that is different from and that is one or more frequency spacings from the frequency band of the carrier on which the first downlink signal is located.

According to a fifth aspect, a communication system is provided, including a network device that performs the method according to the first aspect and a first terminal device that performs the method according to the second aspect.

According to a sixth aspect, a communication apparatus is provided, including a processor. The processor is configured to: after being coupled to a memory and reading computer instructions stored in the memory, perform, according to the instructions, the method according to the first aspect or the second aspect.

With reference to the sixth aspect, in a possible implementation, the communication apparatus further includes the memory. The memory is configured to store the computer instructions.

With reference to the sixth aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

With reference to the sixth aspect, in a possible implementation, the communication apparatus may be a chip or a chip system. When the communication apparatus is the chip system, the communication apparatus may include a chip, or may include a chip and another discrete device.

According to a seventh aspect, a computer-readable storage medium is provided. The computer-readable storage medium stores instructions. When the instructions are run on a computer, the computer is enabled to perform the method according to the first aspect or the second aspect.

According to an eighth aspect, a computer program product including instructions is provided. When the computer program product runs on a computer, the computer is enabled to perform the method according to the first aspect or the second aspect.

For technical effect brought by any one of the possible implementations of the fifth aspect to the eighth aspect, refer to technical effect brought by different implementations of the first aspect. Details are not described herein again.

### BRIEF DESCRIPTION OF DRAWINGS

FIG. 1A is a spectrum diagram of a double-sideband OOK/ASK modulation signal in the conventional technology;
FIG. 1B is a diagram of a time domain waveform of a double-sideband OOK/ASK modulation signal in the conventional technology;
FIG. 2 is a spectrum diagram of an uplink double-sideband OOK/ASK modulation signal in different configurations in the conventional technology;
FIG. 3 is a diagram of an architecture of a communication system according to an embodiment of this application;
FIG. 4 is a diagram 1 of a structure of a communication apparatus according to an embodiment of this application;
FIG. 5 is a flowchart of a communication method according to an embodiment of this application;
FIG. 6A is a diagram 1 of a capability of a first terminal device according to an embodiment of this application;
FIG. 6B is a diagram 2 of a capability of a first terminal device according to an embodiment of this application;
FIG. 6C is a diagram 3 of a capability of a first terminal device according to an embodiment of this application;
FIG. 6D is a diagram 4 of a capability of a first terminal device according to an embodiment of this application;
FIG. 6E is a diagram 5 of a capability of a first terminal device according to an embodiment of this application;
FIG. 6F is a diagram 6 of a capability of a first terminal device according to an embodiment of this application;
FIG. 7A is a diagram 7 of a capability of a first terminal device according to an embodiment of this application;
FIG. 7B is a diagram 8 of a capability of a first terminal device according to an embodiment of this application;
FIG. 7C is a diagram 9 of a capability of a first terminal device according to an embodiment of this application;
FIG. 8 is a diagram 10 of a capability of a first terminal device according to an embodiment of this application; and
FIG. 9 is a diagram 2 of a structure of a communication apparatus according to an embodiment of this application.

### DESCRIPTION OF EMBODIMENTS

For ease of understanding technical solutions in embodiments of this application, the following first briefly describes technologies or terms related to this application.

First, backscatter communication is described.

With development of a machine type communication (machine type communication, MTC) technology and an Internet of Things (Internet of Things, IoT) technology in a fifth generation (5th generation, 5G) new radio (new radio, NR), a quantity of IoT devices is increasing, and a requirement for reducing power consumption of the IoT devices is also increasingly strong. As early as a 4th generation (4th generation, 4G) mobile communication era, the 3rd generation partnership project (3rd generation partnership project, 3GPP) organization has proposed a narrowband Internet of Things (narrowband IoT, NB-IoT) system. However, because an NB-IoT terminal device needs to obtain energy supply from the outside, for example, a power supply device or a power supply circuit of a battery, and needs to have a capability of generating a high frequency local oscillator carrier, power consumption of the NB-IoT terminal device can only reach a milliwatt level. For implementing a purpose of connecting everything in a 5G IoT technology, a passive terminal device or a semi-passive terminal device accesses a 5G network and performs effective communication in the 5G network, namely, passive Internet of Things or backscatter communication mentioned in 3GPP release 18 (release-18), where the passive Internet of Things or backscatter communication becomes a key research direction of current 5G or 5.5th generation (5.5th generation, 5.5G) and above communication systems. The passive or semi-passive terminal device does not need energy always provided from the outside, and may use a radio frequency signal that is passively received from the outside as local energy supply, or may use another energy harvesting manner in combination. A passive terminal device and a semi-passive terminal device may be collectively referred to as backscatter communication terminal devices or passive Internet of Things terminal devices, and the passive terminal device may also be referred to as a passive backscatter communication terminal device. In the passive Internet of Things/backscatter communication, a "terminal device" may also be referred to as a "label".

In comparison with the NB-IoT terminal device, power consumption of a backscatter communication terminal device may reach a hundred microwatt level, or even less than 100 microwatts. In view of the limitation of power consumption, the backscatter communication terminal device may not have a capability of generating a high frequency local oscillator carrier, that is, the backscatter communication terminal device does not have a capability of generating a local carrier corresponding to a downlink radio frequency signal. Therefore, when demodulating a downlink radio frequency signal, the backscatter communication terminal cannot use a coherent demodulation mode, but can only rely on a non-coherent demodulation mode. In the communication field, most commonly used non-coherent demodulation is envelope detection (envelope detection). Further, a receive end device may first pass a received radio frequency signal through a rectifier diode to implement self-mixing or self-multiplication, and then pass a signal output by the rectifier diode through a baseband low-pass resistance capacitor (resistance capacitor, RC) filter to filter out a high-frequency component, to obtain an effective modulated baseband signal. Then, the receive end device may sample the modulated baseband signal, and input a sampled digital signal into a signal energy or amplitude comparator, to implement information decision.

Second, an on-off keying (on-off keying, OOK)/amplitude shift keying (amplitude shift keying, ASK) modulation signal is described.

### 1. Conventional OOK/ASK modulation signal or double-sideband OOK/ASK modulation signal

OOK/ASK modulation is an amplitude modulation mode. Envelope detection may be used during demodulation. Different from a modulation manner, that is frequently used in an NR system, for example, phase-shift keying (phase-shift keying, PSK) or quadrature amplitude modulation (quadrature amplitude modulation, QAM), in which two in-phase quadrature (in-phase quadrature, IQ) signals exist, there is only one modulation signal in the OOK/ASK modulation. OOK/2ASK modulation is used as an example. A transmit end apparatus modulates "0" and "1" in an original bit sequence into signals of two amplitudes. For example, the transmit end apparatus modulates "0" and "1" into rectangular or square wave signals or nearly rectangular or square wave signals with an amplitude 0 and an amplitude 1. Because there is only one modulation signal in the OOK/ASK modulation, a spectrum function of a signal obtained through the OOK/ASK modulation, namely, an OOK/ASK modulation signal, is conjugate symmetric about a center frequency, and a power spectrum function is axisymmetric about the center frequency. Therefore, a conventional OOK/ASK modulation signal is a double-sideband modulation signal.

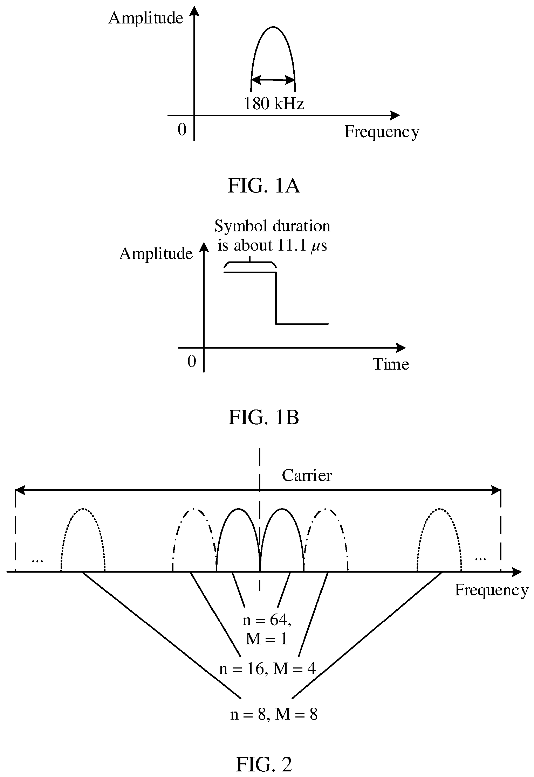

Generally, a problem of a double-sideband modulation signal is low spectral efficiency. For example, if a symbol rate of the OOK/ASK modulation signal is R, that is, an effective signal bandwidth is R, a main lobe bandwidth or an actual transmission bandwidth in frequency domain is 2W. In this case, effective spectral efficiency may be calculated as: effective signal bandwidth/actual transmission bandwidth = W/2W = 0.5. As shown in FIG. 1A, in frequency domain, a horizontal axis indicates a frequency, and a vertical axis indicates an amplitude. An actual transmission bandwidth of an OOK/ASK modulation signal is 180 kHz, which is equivalent to one resource block (resource block, RB) in a 5th generation (5th generation, 5G) new radio (new radio, NR) system, but an effective signal bandwidth is only 90 kHz. FIG. 1B shows a time domain waveform corresponding to FIG. 1A. A horizontal axis indicates time, and a vertical axis indicates an amplitude. Duration of each OOK/ASK modulation symbol is: 1/effective signal bandwidth = 1/90 kHz ≈ 11.1 µs. A 5G NR system is used as an example. A subcarrier spacing is 15 kHz. Before a cyclic prefix (cyclic prefix, CP) is added, duration of one orthogonal frequency division multiplexing (orthogonal frequency division multiplexing, OFDM) symbol is 1/15 kHz ≈ 66.7 µs. In other words, only a maximum of (66.7 µs/11.1 µs ≈ ) six OOK/ASK symbols can be carried in duration of one OFDM symbol.

In conclusion, a double-sideband frequency domain characteristic of the OOK/ASK modulation signal affects signal transmission efficiency. In a passive Internet of Things or backscatter communication scenario, if a base station modulates a downlink signal through OOK/ASK, transmission efficiency of the downlink signal is also affected. With reference to the foregoing example, if a quantity of OOK/ASK symbols carried in the duration of one OFDM symbol needs to be doubled, duration of each OOK/ASK modulation symbol needs to be 1/180 kHz ≈ 5.55 µs. In other words, an actual bandwidth of 180 kHz and an actual transmission bandwidth of 360 kHz that is equivalent to two RBs in the 5G NR system are required.

### 2. Single-sideband OOK/ASK modulation signal

An "upper sideband (upper sideband, USB)" in embodiments of this application may also be referred to as a "right sideband" or a "positive sideband". Similarly, a "lower sideband (lower sideband, LSB)" in embodiments of this application may also be referred to as a "left sideband" or a "negative sideband". Unified descriptions are provided herein. Details are not described below again.

For improving spectral efficiency, an upper half sideband frequency domain signal or a lower half sideband frequency domain signal of a double-sideband OOK/ASK modulation signal may be eliminated. For example, an OOK/ASK baseband signal is *s*(*t*), a frequency domain signal corresponding to *s*(*t*) is *S*(*f*), and Hilbert (Hilbert) transform of *s*(*t*) is *ŝ*(*t*). The Hilbert transform means that a modulus value of a frequency domain response of a signal remains unchanged, but a phase shifts by 90°, that is, a frequency domain signal corresponding to *ŝ*(*t*) is - *j* sgn(*f*)*S*(*f*). If a generated baseband signal is *m*(*t*) *= s*(*t*) ± *jŝ*(*t*) , a frequency domain signal corresponding to *m(t)* is *S*(*f*) ± sgn(*f*)*S*(*f*) , that is, in frequency domain, in comparison with *s*(*t*) , only an upper sideband or a lower sideband is reserved for *m(t).* Therefore, *m(t)* may be referred to as a single-sideband signal, and the foregoing transformation from *s*(*t*) to *m(t)* may be referred to as IQ transformation.

When a symbol rate is R, because only an upper sideband or a lower sideband is reserved for a single-sideband OOK/ASK modulation signal, that is, an actual transmission bandwidth is also R, spectral efficiency of the single-sideband OOK/ASK modulation signal may be increased to 1.0. For example, both an effective signal bandwidth and an actual transmission bandwidth of a single-sideband OOK/ASK modulation signal are 180 kHz, and duration of each single-sideband OOK/ASK modulation symbol is: 1/ effective signal bandwidth = 1/180 kHz ≈ 5.55 µs, which is half of duration of a double-sideband OOK/ASK modulation symbol. The 5G NR system is used as an example. A subcarrier spacing is 15 kHz, and before a CP is added, duration of one OFDM symbol is 1/15 kHz ≈ 66.7 µs. In other words, a maximum of (66.7 µs/5.55 µs ≈ ) 12 single-sideband OOK/ASK symbols can be carried in the duration of one OFDM symbol, and the quantity of symbols is twice a quantity of double-sideband OOK/ASK symbols.

Third, terminal devices having different frequency shift capabilities are described.

As described in the background, the terminal devices having different frequency shift capabilities may send uplink signals having different frequency offsets relative to a center frequency of a downlink signal. Based on values of the frequency shift capabilities, the terminal devices may be classified into the following types:

### 1. Terminal device having an intra-carrier frequency shift capability

By adjusting a line code rate M and a time length T of a unit modulation symbol, a base station may dynamically adjust a frequency domain location and a frequency domain bandwidth of an uplink signal sent by the terminal device on a carrier on which the downlink signal is located. A line code may be a code type for line coding, for example, Manchester coding or Miller coding. Line coding generally refers to a process in which a source signal or a signal output by an encoder presents a periodic rising edge or falling edge, and a transformation of line coding makes information transmission more suitable for a digital signal transmitted on a channel.

For example, the base station may configure different line code rates M and different time lengths T of a unit modulation symbol shown in Table 1. The Manchester coding is used as an example. A unit information bit is encoded into 2M symbols, and symbols in the 2M symbols are characterized by periodic alternation of 0 and 1. For example, when M=2, an information bit 1 is encoded into symbols with alternating high levels and low levels {1010}, and an information bit 0 is encoded into symbols with alternating low levels and high levels {0101}. Duration of a symbol is equal to a time length of a modulation symbol. The time length T of the unit modulation symbol is represented by R * unit symbol time length, and the unit symbol time length herein is 3.125 µs.

**Table 1**

| R | M |
|---|---|
| 64 | 1 |
| 16 | 4 |
| 8 | 8 |
| 4 | 16 |

As described above, in frequency domain, the conventional OOK/ASK modulation signal corresponds to two sidebands symmetric about the center frequency, namely, an upper sideband and a lower sideband. With reference to Table 1, FIG. 2 is a spectrum diagram of an uplink signal in different configurations. The uplink signals in the different configurations are all located in a same carrier, and have two sidebands symmetric about a center frequency. Frequency domain locations of the uplink signals in the different configurations are different. For example, in comparison with an uplink signal corresponding to R=64 and M=1, an uplink signal corresponding to R=16 and M=4 has a 5 kHz offset. In comparison with the uplink signal corresponding to R=16 and M=4, an uplink signal corresponding to R=8 and M=8 has a 10 kHz offset. However, because a product of a modulation symbol length and a line code rate is 64 and remains unchanged, frequency domain bandwidths of the uplink signals in the different configurations are the same.

If the terminal device has an IQ modulation circuit or a circuit for suppressing an upper half sideband or a lower half sideband of an uplink signal, the terminal device may have a capability of sending a single-sideband uplink signal. A Q signal is a signal obtained by performing Hilbert transform on an I signal. Only an upper sideband signal or a lower sideband signal is reserved for the single-sideband uplink signal, and the single-sideband uplink signal may be located at a frequency domain location obtained by performing addition on a center frequency and a frequency offset, or may be located at a frequency domain location obtained by performing subtraction on the center frequency and the frequency offset. Correspondingly, a frequency domain bandwidth of the single-sideband uplink signal is a frequency domain bandwidth of the upper sideband signal or the lower sideband signal, and in comparison with a frequency domain bandwidth of a double-sideband uplink signal, the frequency domain bandwidth is reduced by half.

A limitation of a terminal device having only an intra-carrier frequency shift capability is that the terminal device sends an uplink signal only at a frequency offset within one carrier, frequency resources available for sending the uplink signal are limited, and all uplink frequency domain resources may fail to be effectively used. Consequently, a capacity for uplink signal transmission is limited.

### 2. Terminal device having an intra-frequency-band inter-carrier frequency shift capability

This type of terminal device may generate an intermediate frequency clock signal with a frequency of *fₘ* , and therefore may perform frequency mixing on the intermediate frequency clock signal and a received downlink signal to obtain an uplink signal with a specific offset. For example, the frequency of the intermediate frequency clock signal is 2.16 MHz, and the terminal device may use a frequency divider to divide the intermediate-frequency clock to generate a local signal of a specific frequency, for example, including 180 kHz, 360 kHz, or 540 kHz. The terminal device may perform frequency mixing on the signal generated through frequency division of the frequency divider and the received downlink signal, to shift a center frequency of a carrier of a baseband signal by 180 kHz, 360 kHz, or 540 kHz.

Because a clock signal for frequency mixing is usually a single signal, for example, a generated clock signal for frequency mixing is cos(2*π fₘt*) , the clock signal has frequency components at both a frequency + *fₘ* and a frequency - *fₘ.* If the terminal device does not have an IQ circuit, the uplink signal obtained through frequency mixing is a double-sideband signal whose carrier center frequencies are at *f_{c} + fₘ* and *f_{c} - fₘ*, where *f_{c}* is a center frequency of the downlink signal. If the terminal device has a circuit for eliminating a one-sideband signal, the uplink signal obtained through frequency mixing is a baseband signal whose center frequency is at *f_{c} + fₘ* or *f_{c} - fₘ.*

### 3. Terminal device having an inter-frequency-band frequency shift capability

This type of terminal device may generate, via a ring oscillator or a crystal oscillator circuit, a medium- and high-frequency clock signal with a frequency of *f_{b}* , so that an inter-frequency-band frequency offset can be implemented. For example, for an n8 frequency range in a frequency division duplexing (frequency division duplexing, FDD) frequency range, a downlink frequency range is from 925 MHz to 960 MHz, and an uplink frequency range is from 880 MHz to 915 MHz. A frequency spacing between the uplink frequency range and the downlink frequency range is -45 MHz. The terminal device having an inter-frequency-band frequency shift capability may send a downlink signal in a downlink frequency range of FDD, and send an uplink signal in an uplink frequency range of FDD.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

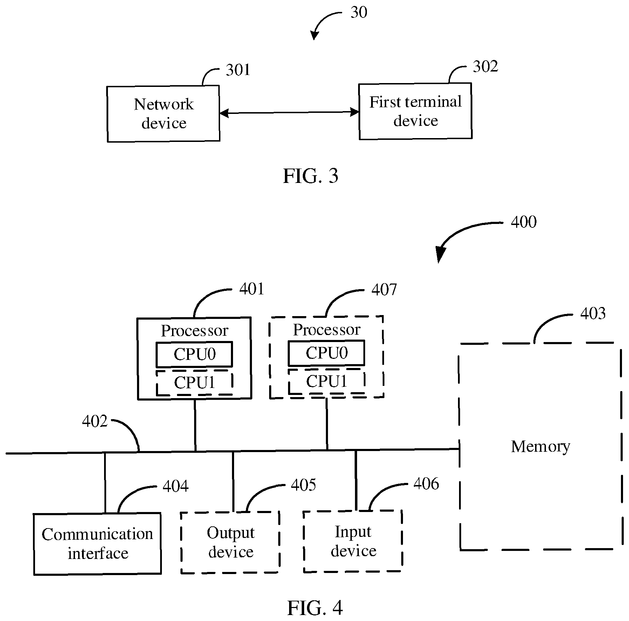

FIG. 3 shows a communication system 30 according to an embodiment of this application. The communication system 30 includes a network device 301 and a first terminal device 302 that can communicate with each other. The first terminal device 302 is configured to send first information to the network device 301. The first information indicates that the first terminal device 302 has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located. The network device 301 is configured to receive the first information from the first terminal device 302. The network device 301 is further configured to: determine second information based on the first information, and send the second information to the first terminal device 302. The second information indicates a frequency domain resource used by the first terminal device 302 to send a first uplink signal corresponding to the first downlink signal. The first terminal device 302 is further configured to: receive the second information from the network device 301, and send, to the network device 301 on the frequency domain resource indicated by the second information, the first uplink signal corresponding to the first downlink signal.

Embodiments of this application are applicable to a 5G NR system, including a passive Internet of Things, a semi-passive Internet of Things, an active tag, an Internet of Things using a backscatter technology, and an environmental Internet of Things. Alternatively, embodiments of this application are applicable to a future wireless communication system. This is not limited in embodiments of this application.

The network device may be a base station, a macro base station, a pole site, a micro base station, a small cell, a helper (helper), a reader (reader), a terminal device, or another device that has a function of exciting a passive terminal device or a semi-passive terminal device. The first terminal device may be a passive terminal device, a passive terminal device having an envelope detection receiver, a passive IoT terminal device, a semi-passive terminal device, a semi-passive IoT terminal device, a non-active terminal device, a semi-non-active terminal device, an active terminal device, a terminal device having a backscatter capability, a terminal device having a reverse carrier capability, a terminal device having an active carrier transmission capability, or a label.

Optionally, related functions of the network device or the first terminal device in embodiments of this application may be implemented by one device, may be jointly implemented by a plurality of devices, or may be implemented by one or more function modules in one device. This is not specifically limited in embodiments of this application. It may be understood that the foregoing functions may be network elements in a hardware device, software functions running on dedicated hardware, a combination of hardware and software, or virtualization functions instantiated on a platform (for example, a cloud platform).

For example, the related functions of the network device or the first terminal device in embodiments of this application may be implemented through a communication apparatus 400 in FIG. 4.

FIG. 4 is a diagram of a structure of the communication apparatus 400 according to an embodiment of this application. The communication apparatus 400 includes one or more processors 401, a communication line 402, and at least one communication interface (where in FIG. 4, only an example in which a communication interface 404 and one processor 401 are included is used for description), and optionally, may further include a memory 403.

The processor 401 may be a CPU, a microprocessor, an application-specific integrated circuit (application-specific integrated circuit, ASIC), or one or more integrated circuits configured to control program execution of the solutions of this application.

The communication line 402 may include a path for connecting different components.

The communication interface 404 may be a transceiver module, configured to communicate with another device or a communication network, for example, Ethernet, a RAN, or a WLAN. For example, the transceiver module may be an apparatus like a transceiver or a transceiver machine. Optionally, the communication interface 404 may alternatively be a transceiver circuit that is located in the processor 401 and that is configured to implement signal input and signal output of the processor.

The memory 403 may be an apparatus having a storage function. For example, the memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 402. The memory may alternatively be integrated with the processor.

The memory 403 is configured to store computer-executable instructions for executing the solutions in this application, and the processor 401 controls the execution. The processor 401 is configured to execute the computer-executable instructions stored in the memory 403, to implement the communication method provided in embodiments of this application.

Alternatively, in embodiments of this application, the processor 401 may implement a processing-related function in the communication method provided in the following embodiments of this application, and the communication interface 404 is responsible for communicating with another device or a communication network. This is not specifically limited in embodiments of this application.

The computer-executable instructions in embodiments of this application may also be referred to as application program code. This is not specifically limited in embodiments of this application.

During specific implementation, in an embodiment, the processor 401 may include one or more CPUs, for example, a CPU 0 and a CPU 1 in FIG. 4.

During specific implementation, in an embodiment, the communication apparatus 400 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 400 may further include an output device 405 and an input device 406. The output device 405 communicates with the processor 401, and may display information in a plurality of manners.

The communication apparatus 400 may be a general-purpose apparatus or a dedicated apparatus. For example, the communication apparatus 400 may be a desktop computer, a portable computer, a network server, a palmtop computer (personal digital assistant, PDA), a mobile phone, a tablet computer, a wireless terminal apparatus, a vehicle-mounted terminal apparatus, an embedded device, or a device having a structure similar to that in FIG. 4. A type of the communication apparatus 400 is not limited in embodiments of this application.

The following describes the communication method provided in embodiments of this application in detail with reference to FIG. 1A to FIG. 4.

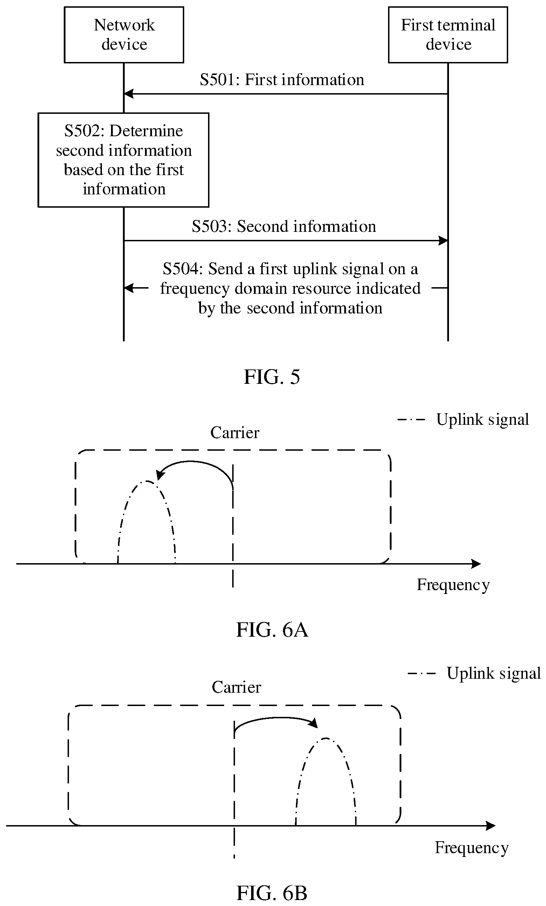

FIG. 5 shows a communication method according to an embodiment of this application. The communication method includes the following steps.

Step S501: A first terminal device sends first information to a network device, and correspondingly, the network device receives the first information from the first terminal device.

The first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located.

Optionally, a second terminal device sends, to the network device, information indicating that the second terminal device has a capability of sending an uplink signal on the first carrier. Correspondingly, the network device receives, from the second terminal device, the information indicating that the second terminal device has the capability of sending the uplink signal on the first carrier.

Optionally, the first carrier may be a carrier on which the first downlink signal is located. That the first terminal device has a capability of sending an uplink signal on the first carrier includes: The first terminal device has a capability of sending the uplink signal at a first frequency domain location that is greater than the center frequency of the first downlink signal on the first carrier and a second frequency domain location that is less than the center frequency of the first downlink signal on the first carrier, where a value of a frequency domain offset between the first frequency domain location and a center frequency of the first downlink signal is the same as a value of a frequency domain offset between the second frequency domain location and the center frequency of the first downlink signal; or the first terminal device has a capability of sending the uplink signal at the first frequency domain location or the second frequency domain location. In this solution, because there is a specific frequency spacing between the first downlink signal and the uplink signal, a duplex interference problem generated in a process of communication between the network device and the first terminal device can be avoided to some extent. This helps improve coverage performance of an uplink signal sent by the first terminal device. In addition, the uplink signal occupies only one frequency domain location, and spectral efficiency of the uplink signal is doubled. This helps support more terminal devices to simultaneously send uplink signals on a same frequency domain resource, and improve a system capacity.

In embodiments of this application, that the first terminal device has a capability of sending the uplink signal at a first frequency domain location that is greater than the center frequency of the first downlink signal on the first carrier and a second frequency domain location that is less than the center frequency of the first downlink signal on the first carrier is consistent with a meaning of the following descriptions:
the first terminal device has a capability of sending a double-sideband frequency-shift signal on the carrier on which the first downlink signal is located;
the first terminal device has a capability of sending, on the carrier on which the first downlink signal is located, an uplink signal whose upper sideband is greater than the center frequency of the first downlink signal and whose lower sideband is less than the center frequency of the first downlink signal;
the first terminal device has a capability of sending, on the carrier on which the first downlink signal is located, a modulation signal whose spectral efficiency is 0.5; or
the first terminal device has a capability of sending a double-sideband on the carrier on which the first downlink signal is located, or sending a line code or spreading code modulation signal at the first frequency domain location and the second frequency domain location.

In embodiments of this application, that the first terminal device has a capability of sending, on the carrier on which the first downlink signal is located, the uplink signal at the first frequency domain location that is greater than the center frequency of the first downlink signal or the second frequency domain location that is less than the center frequency of the first downlink signal is consistent with a meaning of the following descriptions:
the first terminal device has a capability of sending a single-sideband frequency-shift signal on the carrier on which the first downlink signal is located;
the first terminal device has a capability of sending, on the carrier on which the first downlink signal is located, only an uplink signal whose upper sideband is greater than the center frequency of the first downlink signal or whose lower sideband is less than the center frequency of the first downlink signal;
the first terminal device has a capability of sending, on the carrier on which the first downlink signal is located, a modulation signal whose spectral efficiency is 1.0; or
the first terminal device has a capability of sending a single-sideband on the carrier on which the first downlink signal is located, or sending a line code or spreading code modulation signal only at the first frequency domain location.

For example, FIG. 6A is a diagram 1 of sending the uplink signal by the first terminal device when the first carrier is the carrier on which the first downlink signal is located. On the carrier on which the first downlink signal is located, the first terminal device may offset only downward the center frequency of the first downlink signal, and send the uplink signal at a first frequency domain location obtained through offset.

For example, FIG. 6B is a diagram 2 of sending the uplink signal by the first terminal device when the first carrier is the carrier on which the first downlink signal is located. On the carrier on which the first downlink signal is located, the first terminal device may offset only upward the center frequency of the first downlink signal, and send the uplink signal at a second frequency domain location obtained through offset.

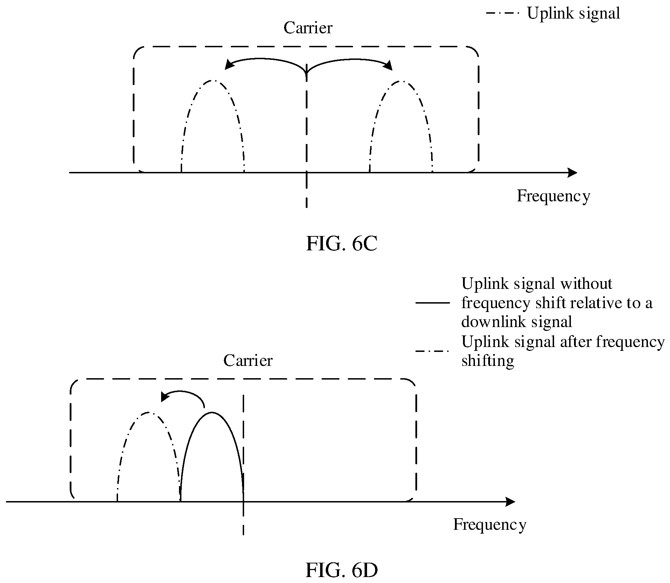

For example, FIG. 6C is a diagram 3 of sending the uplink signal by the first terminal device when the first carrier is the carrier on which the first downlink signal is located. On the carrier on which the first downlink signal is located, the first terminal device may separately offset downward and upward the center frequency of the first downlink signal, and send the uplink signal at a first frequency domain location obtained through offset and a second frequency domain location obtained through offset.

For ease of understanding, the following provides another description of the foregoing example.

With reference to FIG. 6A, FIG. 6D is a diagram 4 of sending the uplink signal by the first terminal device when the first carrier is the carrier on which the first downlink signal is located. On the carrier on which the first downlink signal is located, the first terminal device may offset downward a lower sideband of an uplink signal without frequency shift relative to the downlink signal, and send the uplink signal at a first frequency domain location obtained through offset.

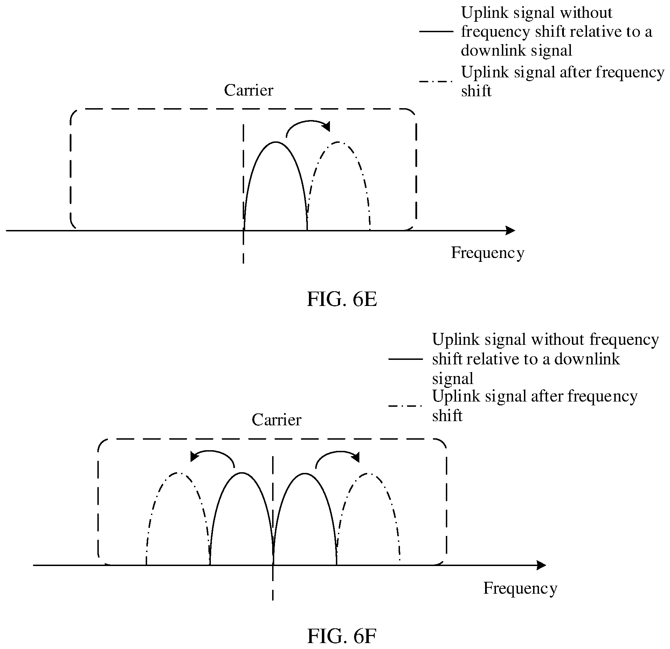

With reference to FIG. 6B, FIG. 6E is a diagram 5 of sending the uplink signal by the first terminal device when the first carrier is the carrier on which the first downlink signal is located. On the carrier on which the first downlink signal is located, the first terminal device may offset upward an upper sideband of the uplink signal without frequency shift relative to the downlink signal, and send the uplink signal at a second frequency domain location obtained through offset.

With reference to FIG. 6B, FIG. 6F is a diagram 6 of sending the uplink signal by the first terminal device when the first carrier is the carrier on which the first downlink signal is located. On the carrier on which the first downlink signal is located, the first terminal device may separately offset upward and downward an upper sideband and a lower sideband of an uplink signal without frequency shift relative to the downlink signal, and send the uplink signal at a first frequency domain location obtained through offset and a second frequency domain location obtained through offset.

Optionally, the first carrier is the carrier that is in the same frequency band as the carrier on which the first downlink signal is located and whose center frequency is different from the center frequency of the carrier on which the first downlink signal is located. That the first terminal device has a capability of sending an uplink signal on the first carrier includes: The first terminal device has a capability of sending the uplink signal on the first carrier whose frequency is a first frequency offset greater than the center frequency of the carrier on which the first downlink signal is located and the first carrier whose frequency is a second frequency offset less than the center frequency of the carrier on which the first downlink signal is located, where the first frequency offset and the second frequency offset are frequency offsets between center frequencies of the first carriers and the center frequency of the carrier on which the first downlink signal is located, and values of the first frequency offset and the second frequency offset are the same; or the first terminal device has a capability of sending the uplink signal on the first carrier at the first frequency offset or the second frequency offset. The first frequency offset is X RBs, and the second frequency offset is -X RBs. In this solution, a frequency spacing or a frequency offset between the first downlink signal and the uplink signal is large, and is greater than a width of one carrier but less than a width of one frequency band. In this solution, a problem of duplex interference generated in a process of communication between the network device and the first terminal device can be better avoided. This helps improve coverage performance of an uplink signal sent by the first terminal device. In addition, in this solution, an uplink spectrum resource can be effectively used, and more terminal devices are supported to simultaneously send uplink signals. This helps improve spectrum resource utilization and increase an uplink transmission system capacity.

In embodiments of this application, when the first carrier is the carrier that is on the same frequency band as the carrier on which the first downlink signal is located and whose center frequency is different from the center frequency of the carrier on which the first downlink signal is located, the following interchangeable descriptions exist.

That the first terminal device has a capability of sending an uplink signal on the first carrier may be replaced with that the first terminal device has a capability of sending an uplink signal on a first carrier obtained through frequency offset.

That the first terminal device has a capability of sending the uplink signal on the first carrier at the first frequency offset or the second frequency offset may be replaced with that the first terminal device has a capability of sending an uplink signal on a first carrier at a frequency offset from a single side or a single edge of the center frequency of the carrier on which the first downlink signal is located.

That the first terminal device has a capability of sending the uplink signal on the first carrier whose frequency is a first frequency offset greater than the center frequency of the carrier on which the first downlink signal is located and the first carrier whose frequency is a second frequency offset less than the center frequency of the carrier on which the first downlink signal is located may be replaced with that the first terminal device has a capability of sending an uplink signal on first carriers at frequency offsets from two sides or two edges of the center frequency of the carrier on which the first downlink signal is located.

In an example of embodiments of this application, when a subcarrier spacing is 15 kHz, one RB includes 12 subcarriers, that is, a bandwidth of one RB is 180 kHz.

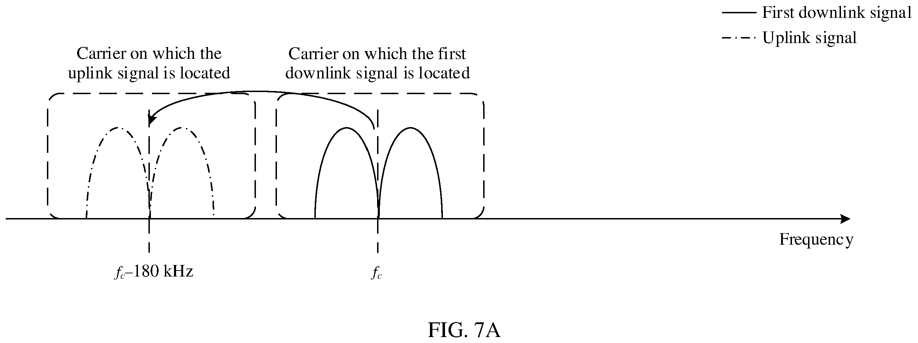

For example, FIG. 7A is a diagram 1 of sending the uplink signal by the first terminal device when the first carrier is the carrier that is on the same frequency band as the carrier on which the first downlink signal is located and whose center frequency is less than the center frequency of the carrier on which the first downlink signal is located. The center frequency of the first carrier is less than the center frequency of the carrier on which the first downlink signal is located, and an offset between the center frequency of the first carrier and the center frequency of the carrier on which the first downlink signal is located is the first frequency offset. When the subcarrier spacing is 15 kHz, a value of the first frequency offset is -180 kHz, that is, the center frequency of the first carrier is offset by -1 RB relative to the center frequency of the carrier on which the first downlink signal is located. In other words, the center frequency of the carrier on which the first downlink signal is located is *f_{c}*, and the center frequency of the first carrier is *f_{c}* -180 kHz.

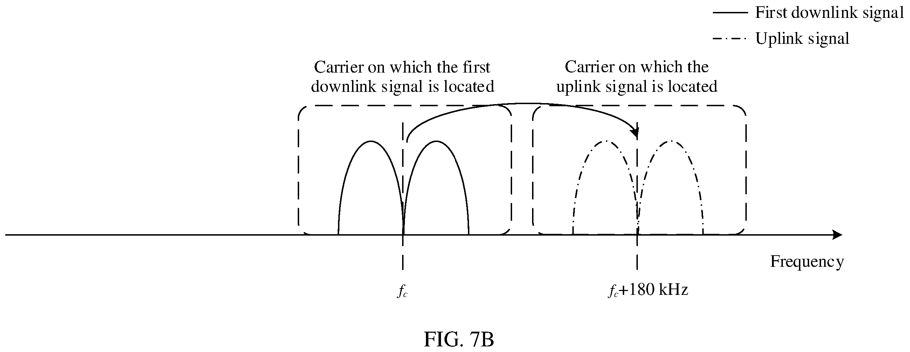

For example, FIG. 7B is a diagram 2 of sending the uplink signal by the first terminal device when the first carrier is the carrier that is on the same frequency band as the carrier on which the first downlink signal is located and whose center frequency is greater than the center frequency of the carrier on which the first downlink signal is located. The center frequency of the first carrier is greater than the center frequency of the carrier on which the first downlink signal is located, and an offset between the center frequency of the first carrier and the center frequency of the carrier on which the first downlink signal is located is the second frequency offset. When the subcarrier spacing is 15 kHz, a value of the second frequency offset is +180 kHz, that is, the center frequency of the carrier on which the uplink signal is located is offset by +1 RB relative to the center frequency of the carrier on which the first downlink signal is located. In other words, the center frequency of the carrier on which the first downlink signal is located is *f_{c}* , and the center frequency of the carrier on which the uplink signal is located is *f_{c}* +180 kHz.

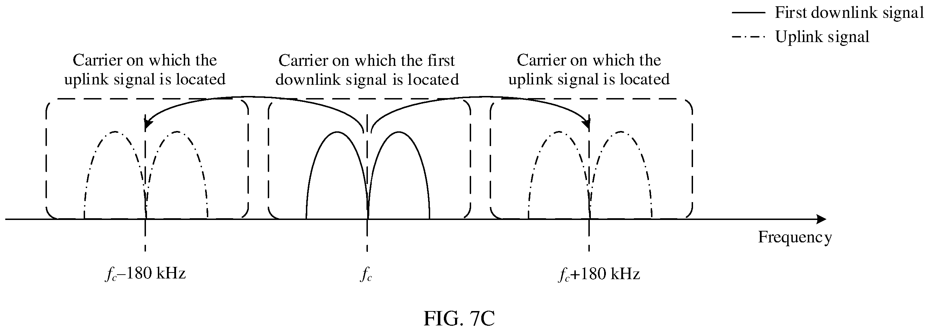

For example, FIG. 7C is a diagram 3 of sending the uplink signal by the first terminal device when the first carrier is carriers that are in the same frequency band as the carrier on which the first downlink signal is located and whose center frequencies are respectively greater than the center frequency of the carrier on which the first downlink signal is located and less than the center frequency of the carrier on which the first downlink signal is located. A frequency offset is ±180 kHz, that is, center frequencies of two carriers on which the uplink signal is located are respectively offset by +1 RB and offset by -1 RB relative to the center frequency of the carrier on which the first downlink signal is located. In other words, the center frequency of the carrier on which the first downlink signal is located is *f_{c}*, a center frequency of one carrier on which the uplink signal is located is *f_{c}* -180 kHz, and a center frequency of the other carrier on which the uplink signal is located is *f_{c}* +180 kHz.

Although the uplink signal shown in FIG. 7A, FIG. 7B, and FIG. 7C is a double-sideband signal, the uplink signal may alternatively be a single-sideband signal. In addition, although the frequency offset of the carrier shown in FIG. 7A, FIG. 7B, and FIG. 7C is one RB, the frequency offset may alternatively be a positive integer multiple of one RB or RB/2. In other words, the frequency offset is at a granularity of one RB or RB/2. This is not limited in embodiments of this application.

Optionally, a value of a frequency offset between the center frequency of the first carrier and the center frequency of the carrier on which the first downlink signal is located is less than or equal to a first threshold.

In embodiments of this application, because there is a limitation on a frequency of a low- and medium-frequency clock signal generated by the first terminal device, there may be an upper limit, namely, the first threshold, of a value of the offset between the center frequency of the first carrier and the center frequency of the carrier on which the first downlink signal is located. For example, the upper limit is X RBs, where X is a positive integer. Optionally, the first information may include the first threshold. Optionally, a value of X may be a positive integer between 2 and 4.

Optionally, the first carrier is the carrier that is located on the frequency band different from that of the carrier on which the first downlink signal is located. That the first terminal device has a capability of sending an uplink signal on the first carrier includes: The first terminal device has a capability of sending the uplink signal on the first carrier in an uplink frequency band of one or more frequency ranges, or the first terminal device has a capability of sending the uplink signal on the first carrier in a frequency band at one or more frequency spacings relative to a frequency band of the carrier on which the first downlink signal is located. In this solution, a frequency spacing or a frequency offset between the first downlink signal and the uplink signal is large, and is an inter-band frequency spacing. In this solution, a problem of duplex interference generated in a process of communication between the network device and the first terminal device can be completely avoided. This helps improve coverage performance of an uplink signal sent by the first terminal device. In addition, in this solution, a spectrum resource of an uplink frequency range of an LTE or NR cellular network can be effectively used, so that sending of an uplink signal complies with a related protocol of the cellular network.

In embodiments of this application, when the first carrier is the carrier that is located on the frequency band different from that of the carrier on which the first downlink signal is located, that the first terminal device has a capability of sending the uplink signal on the first carrier may be replaced with that the first terminal device has a capability of sending the uplink signal on a first carrier obtained through band-level frequency offset.

Optionally, the frequency band on which the carrier of the first downlink signal is located and the frequency band on which the first carrier is located are a downlink frequency band and an uplink frequency band of a frequency division duplexing FDD frequency range.

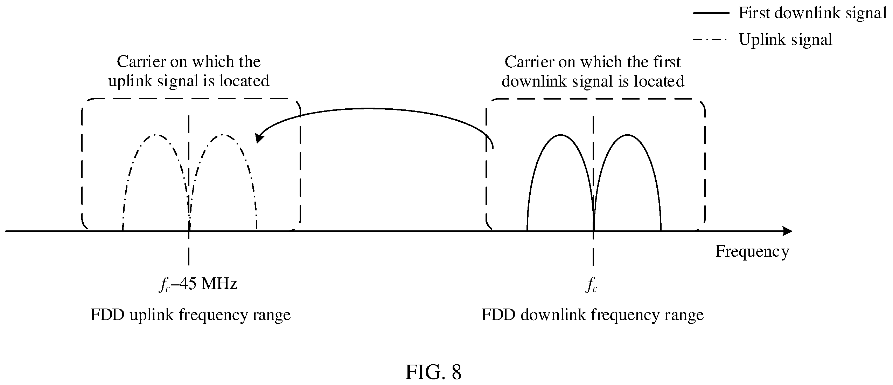

For example, FIG. 8 is a diagram of sending the uplink signal by the first terminal device when the first carrier is the carrier that is located on the frequency band different from that of the carrier on which the first downlink signal is located. The center frequency of the first downlink signal is *f_{c}*, and the carrier on which the first downlink signal is located is located in an FDD downlink frequency range. After inter-band frequency offset is performed, the center frequency of the uplink signal may be *f_{c}* -45 MHz, and a carrier on which the uplink signal is located may be located in an FDD uplink frequency range.

Although the uplink signal shown in FIG. 8 is a double-sideband signal, the uplink signal may alternatively be a single-sideband signal. In addition, although a frequency spacing between a frequency band on which the uplink signal is located and a frequency band on which the first downlink signal is located shown in FIG. 8 is 45 MHz, the frequency spacing may alternatively have one or more other values. For example, in an n8 FDD frequency range, the frequency spacing between the frequency band on which the uplink signal is located and the frequency band on which the first downlink signal is located is 45 MHz. In an n20 FDD frequency range, the frequency spacing between the frequency band on which the uplink signal is located and the frequency band on which the first downlink signal is located is -41 MHz. In an n28 FDD frequency range, a spacing between the frequency band on which the uplink signal is located and the frequency band on which the first downlink signal is located is 55 MHz, and the frequency band spacing may be the value of the offset between the center frequency of the first carrier and the center frequency of the carrier on which the first downlink signal is located. This is not limited in embodiments of this application.

In embodiments of this application, communication between the network device and the first terminal device may be performed based on an FDD frequency range in an NR system. For example, an uplink signal is transmitted in an uplink FDD frequency range, and a downlink signal is transmitted in a downlink FDD frequency range. Further, the communication method provided in embodiments of this application can be used to improve compatibility with an LTE or NR system.

Optionally, the first information is carried in a message Msg1 or Msg3 that is sent by the first terminal device in a random access process.

Step S502: The network device determines second information based on the first information.

The second information indicates a frequency domain resource used by the first terminal device to send a first uplink signal. In other words, the second information indicates a frequency domain location and a frequency domain bandwidth of the first uplink signal on the first carrier.

Optionally, the second information includes at least one of the following: modulation and coding scheme (modulation and coding scheme, MCS) information, a quantity of frequency domain locations occupied by the first uplink signal, a frequency offset between the first uplink signal and the first downlink signal, the frequency offset between the center frequency of the first carrier and the center frequency of the carrier on which the first downlink signal is located, or a bandwidth of the first uplink signal. In this solution, information included in the second information may be used by the first terminal device to determine a frequency domain location and a frequency domain bandwidth of the first uplink signal, that is, determine a frequency domain resource occupied by the first uplink signal. The quantity of occupied frequency domain locations is 1 or 2.

Optionally, the quantity of frequency domain locations occupied by the first uplink signal may be replaced with spectral efficiency of the first uplink signal or single-sideband or double-sideband information of the first uplink signal. When the quantity of occupied frequency domain locations is 1, corresponding spectral efficiency of the first uplink signal is 1 or the first uplink signal is a single-sideband signal. When the quantity of occupied frequency domain locations is 2, the corresponding spectral efficiency of the first uplink signal is 0.5 or the first uplink signal is a double-sideband signal.

The MCS information may include a line code or spreading code factor and/or a time length of a unit modulation symbol. Optionally, the time length of the unit modulation symbol may also be described as a multiple of a time length of a unit chip, a time length of a line code chip, a time length of a symbol, or a time length of a reference modulation symbol. Optionally, the line code factor may be described as a line code rate, a spreading code factor, a spreading code rate, a coding factor, or a code rate.

For example, when the first carrier is the carrier on which the first downlink signal is located, the second information may be the modulation and coding scheme (Modulation and Coding Scheme, MCS) information. The information included in the second information may be any row in Table 2, Table 3, or Table 4.

**Table 2**

| R | M | Sideband/Spectral efficiency |
|---|---|---|
| 64 | 1 | Double-sideband/0.5 |
| 64 | 1 | Upper sideband/1.0 |
| 64 | 1 | Lower sideband/1.0 |
| 32 | 2 | Double-sideband/0.5 |
| 32 | 2 | Upper sideband/1.0 |
| 32 | 2 | Lower sideband/1.0 |

**Table 3**

| R | M | Frequency offset |
|---|---|---|
| 64 | 1 | ±7.5 kHz |
| 64 | 1 | +7.5 kHz |
| 64 | 1 | -7.5 kHz |
| 32 | 2 | ±22.5 kHz |
| 32 | 2 | +22.5 kHz |
| 32 | 2 | -22.5 kHz |

**Table 4**

| R | M | Frequency offset value |
|---|---|---|
| 64 | 1 | 7.5 kHz |
| 32 | 2 | 22.5 kHz |
| 16 | 4 | 52.5 kHz |

Here, R indicates a multiple obtained by dividing a time length of a unit modulation symbol by time of a reference modulation symbol. The time length of the unit modulation symbol may be defined as R*Tari, and Tari represents the time length of the reference modulation symbol, for example, Tari is equal to 3.125 µs. Here, M indicates a line code factor, and a line code rate is equal to 1/2 M. MCS parameter configurations of R and M may be used by the first terminal device to determine the frequency offset between the center frequency of the first uplink signal and the center frequency of the first downlink signal, and the bandwidth of the first uplink signal. Whether the first uplink signal at an occupied frequency domain location is a single-side signal or a double-side signal may be directly indicated based on a dedicated field in indication information, or may be indicated jointly based on spectral efficiency or a frequency offset value in the MCS information. For example, that the spectral efficiency in the MCS information is 1.0 indicates that the first uplink signal is a single-sideband signal or an uplink signal located at only one frequency domain location. That the spectral efficiency in the MCS information is 0.5 indicates that the first uplink signal is a double-sideband signal or an uplink signal located at two frequencies. The frequency offset having a positive sign may indicate that the first uplink signal is an upper sideband signal of a double-side signal or occupies a frequency domain location greater than the center frequency of the first downlink signal. The frequency offset having a negative sign may indicate that the first uplink signal is a lower sideband signal of the double-side signal or occupies a frequency domain location less than the center frequency of the first downlink signal. The frequency offset having both positive and negative signs indicate that the first uplink signal is a double-side signal or occupies two frequency domain locations that are respectively greater than and less than the center frequency of the first downlink signal, and values of frequency offsets between the two frequency domain locations and the center frequency of the first downlink signal are equal.

Optionally, when a guard interval between the first carrier and a carrier of an NR uplink signal is less than X RBs, or a guard interval between the first carrier and an NR uplink scheduling signal is less than X RBs, where X is a positive integer, an MCS parameter of an M value corresponding to a frequency domain position that is in the MCS information and that is closest to a boundary of the first carrier is not configured for the first terminal device, or only an MCS index or parameter corresponding to a minimum M value that can be configured in the MCS information is configured for the first terminal device, for example, only an MCS index in which M=1 in the MCS information is configured for the first terminal device. Optionally, in this case, the first terminal device and a terminal that sends the NR uplink signal are located in a same site, a same coverage area, or a same paging area.

Optionally, the network device determines third information to be sent to the second terminal device. Correspondingly, the second terminal device receives the third information from the network device. A value of a line code rate in MCS information included in the third information is different from a value of the line code rate in the MCS information included in the second information. Optionally, a difference between the value of the line code rate in the MCS information included in the third information and the value of the line code rate in the MCS information included in the second information is greater than a specific interval, that is, a difference between a frequency domain location in a carrier corresponding to a parameter in the MCS information included in the second information and a frequency domain location in a carrier corresponding to a parameter in the MCS information included in the third information is greater than a specific frequency domain interval. For example, MCS information included in the second information corresponds to an MCS parameter whose line code rate value is M=1, as shown in a first row in Table 4. MCS information included in the third information corresponds to an MCS parameter whose line code rate value is M=4, as shown in a third row in Table 4. In this case, an MCS parameter corresponding to a line code rate value M=2 cannot be configured in the MCS information included in the third information, as shown in a second row in Table 4.

For example, when the first carrier is the carrier that is on the same frequency band as the carrier on which the first downlink signal is located and whose center frequency is different from the center frequency of the carrier on which the first downlink signal is located, the second information may indicate a frequency domain location of the first carrier by indicating an offset value relative to the center frequency of the carrier on which the first downlink signal is located. For example, the information included in the second information may be any row in Table 5:

**Table 5**

| Center frequency offset |
|---|
| *f_{c}* ±180 kHz |
| *f_{c}* +180 kHz |
| *f_{c}* -180 kHz |

In Table 5, *f_{c}* indicates the center frequency of the first carrier, and the center frequency offset is the first frequency offset and/or the second frequency offset between the center frequency of the first carrier and the center frequency of the carrier on which the first downlink signal is located. Herein, a frequency offset of 1 RB is used as an example. Optionally, the frequency domain location of the first carrier may be indicated based on a dedicated field in indication information. Then, a frequency domain location of the first uplink signal on the first carrier may be indicated in a manner of indicating a frequency domain location of the uplink signal on the first carrier when the first carrier is the carrier on which the first downlink signal is located, as shown in Table 3. Optionally, the frequency domain location of the first carrier may be jointly indicated based on indication information. Status information indicates both a location of the first carrier and the frequency domain location of the first carrier, as shown in Table 5. A value of a frequency offset of the frequency domain location on the carrier is determined relative to the center frequency of the first carrier.

Generally, a frequency offset that is included in the second information and that is between the center frequency of the first carrier and the center frequency of the carrier on which the first downlink signal is located is less than or equal to the first threshold. For example, the first threshold is X RBs, and a value of the frequency offset included in the second information is in an interval [-XRB, XRB]. A value of X is a positive integer. Optionally, the value of X is equal to 2 or 3.

With reference to Table 4, the information included in the second information may alternatively be any row in Table 6.

**Table 6**

| Carrier frequency offset | R | M |
|---|---|---|
| *f_{c}* ±180 kHz | 64 | 1 |
| *f_{c}* +180 kHz | 64 | 1 |
| *f_{c}* -180 kHz | 64 | 1 |

Here, R and M may be used by the first terminal device to determine a frequency location of the first uplink signal on the first carrier and a bandwidth of the first uplink signal.

When the first carrier is the carrier that is located on the frequency band different from that of the carrier on which the first downlink signal is located, the second information may indicate a frequency spacing between the frequency band on which the first uplink signal is located or the center frequency of the first carrier and the carrier on which the first downlink signal is located. In addition to independently indicating the frequency band on which the first uplink signal is located, the second information may jointly indicate information about the first carrier on the frequency band and information about a frequency offset of the first uplink signal on the first carrier.

Step S503: The network device sends the second information to the first terminal device, and correspondingly, the first terminal device receives the second information from the network device.

Optionally, the network device sends the third information to the second terminal device. Correspondingly, the second terminal device receives the third information from the network device.

Optionally, the second information is carried in a paging message, a message Msg4 in a random access process, downlink control information (downlink control information, DCI), a signal carrying a broadcast message, a preamble signal, a reference signal, or a calibration signal.

For example, the second information may be carried on a physical downlink shared channel (physical downlink shared channel, PDSCH). Further, downlink information may be carried in a paging message on the PDSCH, or Msg4 in the random access process.

For example, the second information may be carried in DCI. The DCI may be used to schedule a physical uplink shared channel (physical uplink shared channel, PUSCH) or a physical downlink shared channel (physical downlink shared channel, PDSCH), or may be used to schedule the PDSCH and the PUSCH at the same time. Further, the DCI may be used to schedule Msg4 or a paging message.

For example, the second information may be carried in a preamble signal, a reference signal, or a calibration signal corresponding to the PDSCH. Further, the second information may be carried in a time domain cover code (cover code) of the preamble signal, or the second information may be represented by using a quantity of time domain repetition times of a base signal of the preamble signal, a combination of preamble signals with different time domains, or a combination of a base signal and a negated signal of the base signal. Alternatively, the second information may be represented by using time lengths of different unit modulation symbols or unit lengths of high and low levels in the reference signal or the calibration signal.

Step S504: The first terminal device sends the first uplink signal to the network device on the frequency domain resource indicated by the second information, where the first uplink signal is a signal obtained through modulating the first downlink signal by the first terminal device, or the first uplink signal is a signal generated by the first terminal device; and correspondingly, the network device receives the first uplink signal from the first terminal device on the frequency domain resource indicated by the second information.

Optionally, the second terminal device sends a second uplink signal to the network device on a frequency domain resource indicated by the third information. Correspondingly, the network device receives the second uplink signal from the second terminal device on the frequency domain resource indicated by the third information.

In embodiments of this application, the first terminal device may reflect the received first downlink signal. To be specific, the first terminal device modulates the received first downlink signal based on modulation information, and reflects a modulated first downlink signal. The reflected modulated first downlink signal is the first uplink signal. Alternatively, the first terminal device may actively generate the first uplink signal without reflection, and the first uplink signal is not associated with a downlink signal received by the first terminal device.

Optionally, the second information may indicate the frequency domain location and the frequency domain bandwidth of the first uplink signal on the first carrier. The second information may include MCS information, where the MCS information may include a line code factor and/or a time length of a unit modulation symbol. The second information may further include a quantity of frequency domain locations occupied by the first uplink signal or information about a sideband occupied by the first uplink signal. The frequency domain location of the first uplink signal is a first frequency domain location that is greater than the center frequency of the first downlink signal or a second frequency domain location that is less than the center frequency of the first downlink signal, or the frequency domain location of the first uplink signal is the first frequency domain location that is greater than the center frequency of the first downlink signal and the second frequency domain location that is less than the center frequency of the first downlink signal. The MCS information implicitly indicates a frequency domain location and a frequency domain bandwidth of the first uplink signal on the first carrier to the first terminal device. The first terminal device determines a value of a frequency offset between the first frequency domain location or the second frequency domain location and the center frequency of the first downlink signal, and the bandwidth of the first uplink signal based on the MCS information. The quantity of frequency domain locations occupied by the first uplink signal may alternatively be replaced with the spectral efficiency of the first uplink signal. When the quantity of frequency domain locations occupied by the first uplink signal is 1, the spectral efficiency of the first uplink signal is 1.0. When the quantity of frequency domain locations occupied by the first uplink signal is 2, the spectral efficiency of the first uplink signal is 0.5. The quantity of frequency domain locations occupied by the first uplink signal may alternatively be replaced with the frequency offset between the first uplink signal and the first downlink signal. When the quantity of frequency domain locations occupied by the first uplink signal is 1, the frequency offset between the first uplink signal and the first downlink signal is a positive number or a negative number. When the quantity of frequency domain locations occupied by the first uplink signal is 2, the frequency offsets between the first uplink signal and the first downlink signal are a positive number and a negative number.

For example, the second information is a second row in Table 2, that is, R=32, M=2, and the spectral efficiency is 1.0. When the first terminal device has a capability of sending an upper sideband signal, the first terminal device may determine, based on R=32 and M=2, a specific frequency domain location and frequency domain bandwidth of the first uplink signal on the carrier on which the first downlink signal is located. For a specific determining method, refer to the conventional technology. Details are not described herein again. Then, the first terminal device may send the first uplink signal, where the first uplink signal is an upper sideband signal. The foregoing uses only an example in which the first uplink signal and the first downlink signal are located on a same carrier for description. This example does not constitute any limitation on this application. Actually, the first terminal device may determine a specific frequency domain location and frequency domain bandwidth of the first uplink signal on the first carrier based on R=32 and M=2.

Optionally, the second information further indicates a frequency domain location of the first carrier, and the second information further includes the frequency offset between the center frequency of the first carrier and the center frequency of the carrier on which the first downlink signal is located. The center frequency of the first carrier is a frequency that is in the frequency band of the carrier on which the first downlink signal is located and that is the first frequency offset greater than the center frequency of the carrier on which the first downlink signal is located or the second frequency offset less than the center frequency of the carrier on which the first downlink signal is located, or the center frequency of the first carrier is frequencies that are in the frequency band of the carrier on which the first downlink signal is located and that are the first frequency domain offset greater than the center frequency of the carrier on which the first downlink signal is located and the second frequency offset less than the center frequency of the carrier on which the first downlink signal is located, or the first carrier is located in an uplink frequency band of one or more frequency ranges, or the first carrier is located in a frequency band that is different from and that is one or more frequency spacings from the frequency band of the carrier on which the first downlink signal is located. In this solution, the first terminal device may determine, based on the center frequency of the carrier on which the first downlink signal is located and the frequency offset or the frequency spacing that is included in the second information and that is between the center frequency of the first carrier and the center frequency of the carrier on which the first downlink signal is located, the frequency domain location of the first carrier on which the first uplink signal is located, so that the first terminal device may send the first uplink signal on the first carrier.

For example, the second information is a second row in Table 4, that is, the carrier frequency offset is +180 kHz. The first terminal device may determine, based on the center frequency of the carrier on which the first downlink signal is located and that the carrier frequency offset is +180 kHz, the frequency domain location of the first carrier on which the first uplink signal is located, so that the first terminal device may send the first uplink signal on the first carrier.

For example, the second information is a second row in Table 5, that is, the carrier frequency offset is +180 kHz, R=32, and M=2. The first terminal device may determine, based on the center frequency of the carrier on which the first downlink signal is located and that the carrier frequency offset is +180 kHz, the frequency domain location of the first carrier on which the first uplink signal is located, and determine, based on R=32 and M=2, the specific frequency domain location and frequency domain bandwidth of the first uplink signal on the first carrier. Therefore, the first terminal device may send the first uplink signal on the first carrier.

The foregoing merely provides an example of a manner in which the first terminal device determines, based on the second information, the frequency domain resource for sending the first uplink signal. However, because the second information may further include other information different from the foregoing example, the foregoing example does not constitute any limitation thereto.

In embodiments of this application, the network device may allocate, to the first terminal device based on the first information that is reported by the first terminal device and that indicates that the first terminal device has the capability of sending the uplink signal on the first carrier, a frequency domain resource that satisfies the capability of the first terminal device and that is used to send the first uplink signal. When there are a plurality of first terminal devices, the network device may flexibly schedule frequency domain resources for transmitting a plurality of first uplink signals, so that the frequency domain resources for the plurality of first uplink signals do not overlap, and as many first terminal devices as possible with different capabilities can be accommodated, to maximize an uplink transmission capacity. In addition, the center frequency of the uplink signal is different from the center frequency of the first downlink signal. Therefore, when the network device demodulates the first uplink signal, a problem of cochannel interference caused by sending the first downlink signal can be avoided, to help improve coverage of an uplink.

Both the network device and the first terminal device in the foregoing embodiments may use the architecture of the communication apparatus 400 shown in FIG. 4. Therefore, the processor 401 in the communication apparatus 400 shown in FIG. 4 may invoke application program code stored in the memory 403, to indicate the network device to perform the actions of the network device in the foregoing embodiments, and the processor 401 in the communication apparatus 400 shown in FIG. 4 may invoke application program code stored in the memory 403, to indicate the first terminal device to perform the actions of the first terminal device in the foregoing embodiments. This is not limited in embodiments.

It may be understood that, in the foregoing embodiments, the method and/or the step implemented by the network device may alternatively be implemented by a component (for example, a chip or a circuit) that can be used in the network device. The method and/or the step implemented by the first terminal device may alternatively be implemented by a component (for example, a chip or a circuit) that can be used in the first terminal device. The method and/or the step implemented by the second terminal device may alternatively be implemented by a component (for example, a chip or a circuit) that can be used in the second terminal device.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the network device in the foregoing method embodiments, or an apparatus including the foregoing network device, or a component that can be used in the network device. Alternatively, the communication apparatus may be the first terminal device in the foregoing method embodiments, or an apparatus including the foregoing first terminal device, or a component that can be used in the first terminal device. Alternatively, the communication apparatus may be the second terminal device in the foregoing method embodiments, or an apparatus including the foregoing second terminal device, or a component that can be used in the second terminal device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into function modules based on the foregoing method embodiments. For example, function modules may be obtained through division based on corresponding functions, or two or more functions may be integrated into one processing module. The integrated module may be implemented in a form of hardware, or may be implemented in a form of a software function module. It should be noted that, in embodiments of this application, division into modules is an example, and is merely a logical function division. In an actual implementation, another division manner may be used.

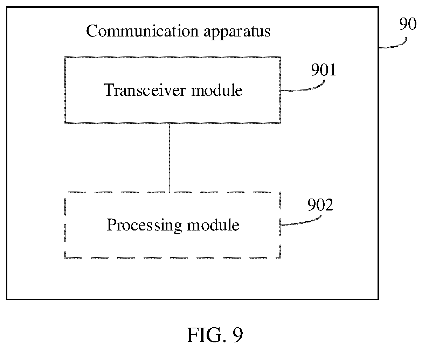

FIG. 9 is a diagram of a structure of a communication apparatus 90. The communication apparatus 90 includes a transceiver module 901. The transceiver module 901 may also be referred to as a transceiver unit, configured to implement a transceiver function, for example, may be a transceiver, a transceiver circuit, a transceiver machine, or a communication interface.

For example, the communication apparatus 90 is the network device in the foregoing method embodiments. In this case, the communication apparatus 90 further includes a processing module 902. The transceiver module 901 is configured to receive first information from a first terminal device, where the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located. The processing module 902 is configured to determine second information based on the first information, where the second information indicates a frequency domain resource used by the first terminal device to send a first uplink signal. The first uplink signal is a signal obtained through modulating the first downlink signal by the first terminal device, or the first uplink signal is a signal generated by the first terminal device. The transceiver module 901 is further configured to send the second information to the first terminal device.

For example, the communication apparatus 90 is the first terminal device in the foregoing method embodiments. The transceiver module 901 is configured to send first information to a network device, where the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located. The transceiver module 901 is further configured to receive second information from the network device, and sends a first uplink signal to the network device on a frequency domain resource indicated by the second information, where the first uplink signal is a signal obtained through modulating the first downlink signal by the first terminal device, or the first uplink signal is a signal generated by the first terminal device.

All related content of the steps in the foregoing method embodiments may be cited in function descriptions of the corresponding function modules. Details are not described herein again.

In this embodiment, the communication apparatus 90 is presented in a form of function modules obtained through division in an integrated manner. The "module" herein may be an ASIC, a circuit, a processor that executes one or more software or firmware programs, a memory, an integrated logic circuit, and/or another component capable of providing the foregoing functions.

When the communication apparatus 90 is the network device or the first terminal device in the foregoing method embodiments, in a simple embodiment, a person skilled in the art may figure out that the communication apparatus 90 may be in a form of the communication apparatus 400 shown in FIG. 4.

For example, the processor 401 or 407 in the communication apparatus 400 shown in FIG. 4 may invoke the computer-executable instructions stored in the memory 403, to enable the communication apparatus 400 to perform the communication method in the foregoing method embodiments. Specifically, functions/implementation processes of the processing module 902 in FIG. 9 may be implemented by the processor 401 or 407 in the communication apparatus 400 shown in FIG. 4 by invoking the computer-executable instructions stored in the memory 403. Functions/implementation processes of the transceiver module 901 in FIG. 9 may be implemented through a communication module connected to the communication interface 404 in FIG. 4.

The communication apparatus 90 provided in this embodiment can perform the foregoing communication method. Therefore, for technical effect that can be achieved by the communication apparatus 90, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory through the interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in embodiments of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope of protection defined by the following claims and their equivalent technologies.

## Claims

1. A communication method, comprising:
receiving, by a network device, first information from a first terminal device, wherein the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located; and
determining, by the network device, second information based on the first information, and sending the second information to the first terminal device, wherein the second information indicates a frequency domain resource used by the first terminal device to send a first uplink signal, and the first uplink signal is a signal obtained through modulating the first downlink signal by the first terminal device, or the first uplink signal is a signal generated by the first terminal device.

2. The method according to claim 1, wherein that the first terminal device has a capability of sending an uplink signal on the first carrier comprises: the first terminal device has a capability of sending the uplink signal at a first frequency domain location that is greater than the center frequency of the first downlink signal on the first carrier and a second frequency domain location that is less than the center frequency of the first downlink signal on the first carrier, wherein a value of a frequency domain offset between the first frequency domain location and a center frequency of the first carrier is the same as a value of a frequency domain offset between the second frequency domain location and the center frequency of the first carrier; or the first terminal device has a capability of sending the uplink signal at the first frequency domain location or the second frequency domain location on the first carrier.

3. The method according to claim 1 or 2, wherein the first carrier is the carrier that is in the same frequency band as the carrier on which the first downlink signal is located and whose center frequency is different from the center frequency of the carrier on which the first downlink signal is located; and that the first terminal device has a capability of sending an uplink signal on the first carrier comprises: the first terminal device has a capability of sending the uplink signal on the first carrier whose frequency is a first frequency offset greater than the center frequency of the carrier on which the first downlink signal is located and the first carrier whose frequency is a second frequency offset less than the center frequency of the carrier on which the first downlink signal is located, wherein the first frequency offset and the second frequency offset are frequency offsets between center frequencies of the first carriers and the center frequency of the carrier on which the first downlink signal is located, and values of the first frequency offset and the second frequency offset are the same; or the first terminal device has a capability of sending the uplink signal on the first carrier at the first frequency offset or the second frequency offset.

4. The method according to claim 3, wherein the values of the first frequency offset and the second frequency offset are less than or equal to a first threshold.

5. The method according to any one of claims 1 to 4, wherein the first carrier is the carrier that is located on the frequency band different from that of the carrier on which the first downlink signal is located, and that the first terminal device has a capability of sending an uplink signal on the first carrier comprises: the first terminal device has a capability of sending the uplink signal on the first carrier in an uplink frequency band of one or more frequency ranges, or the first terminal device has a capability of sending the uplink signal on the first carrier in a frequency band at one or more frequency spacings relative to a frequency band of the carrier on which the first downlink signal is located.

6. The method according to claim 5, wherein the frequency band on which the carrier of the first downlink signal is located and the frequency band on which the first carrier is located are two frequency bands of a frequency division duplexing frequency range.

7. The method according to any one of claims 1 to 6, wherein the first information is carried in a message Msg1 or Msg3 that is sent by the first terminal device in a random access process.

8. The method according to any one of claims 1 to 7, wherein the second information comprises at least one of the following:
a quantity of frequency domain locations occupied by the first uplink signal, a frequency offset between the first uplink signal and the first downlink signal, a frequency offset between the center frequency of the first carrier and the center frequency of the carrier on which the first downlink signal is located, or a bandwidth of the first uplink signal.

9. The method according to any one of claims 1 to 8, wherein the second information is carried in a paging message, Msg4 in a random access process, downlink control information DCI, a signal carrying a broadcast message, a preamble signal, a reference signal, or a calibration signal.

10. The method according to any one of claims 1 to 9, wherein the second information indicates a frequency domain location and a frequency domain bandwidth that are of the first uplink signal on the first carrier, and the second information comprises modulation and coding scheme MCS information and/or a quantity of frequency domain locations occupied by the first uplink signal, wherein
the quantity of frequency domain locations occupied by the first uplink signal is 1 or 2, and the MCS information is used by the first terminal device to determine a value of a frequency offset between the first frequency domain location and/or the second frequency domain location and the center frequency of the first downlink signal, and the bandwidth of the first uplink signal.

11. The method according to claim 10, wherein the MCS information comprises a value of a line code or spreading code factor of the first uplink signal, and/or a modulation symbol length of the first uplink signal.

12. The method according to claim 10 or 11, wherein the second information further indicates a frequency domain location of the first carrier, and the second information further comprises the frequency offset between the center frequency of the first carrier and the center frequency of the carrier on which the first downlink signal is located, wherein
the center frequency of the first carrier is a frequency that is in the frequency band of the carrier on which the first downlink signal is located and that is the first frequency offset greater than the center frequency of the carrier on which the first downlink signal is located or the second frequency offset less than the center frequency of the carrier on which the first downlink signal is located, or the center frequency of the first carrier is frequencies that are in the frequency band of the carrier on which the first downlink signal is located and that are the first frequency offset greater than the center frequency of the carrier on which the first downlink signal is located and the second frequency offset less than the center frequency of the carrier on which the first downlink signal is located, or the first carrier is located in an uplink frequency band of one or more frequency ranges; or the first carrier is located in a frequency band that is different from and that is one or more frequency spacings from the frequency band of the carrier on which the first downlink signal is located.

13. A communication method, comprising:
sending, by a first terminal device, first information to a network device, wherein the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located; and
receiving, by the first terminal device, second information from the network device, and sending a first uplink signal to the network device on a frequency domain resource indicated by the second information, wherein the first uplink signal is a signal obtained through modulating the first downlink signal by the first terminal device, or the first uplink signal is a signal generated by the first terminal device.

14. The method according to claim 13, wherein that the first terminal device has a capability of sending an uplink signal on the first carrier comprises: the first terminal device has a capability of sending the uplink signal at a first frequency domain location that is greater than the center frequency of the first downlink signal on the first carrier and a second frequency domain location that is less than the center frequency of the first downlink signal on the first carrier, wherein a value of a frequency domain offset between the first frequency domain location and a center frequency of the first carrier is the same as a value of a frequency domain offset between the second frequency domain location and the center frequency of the first carrier; or the first terminal device has a capability of sending the uplink signal at the first frequency domain location or the second frequency domain location on the first carrier.

15. The method according to claim 13 or 14, wherein the first carrier is the carrier that is in the same frequency band as the carrier on which the first downlink signal is located and whose center frequency is different from the center frequency of the carrier on which the first downlink signal is located; and that the first terminal device has a capability of sending an uplink signal on the first carrier comprises: the first terminal device has a capability of sending the uplink signal on the first carrier whose frequency is a first frequency offset greater than the center frequency of the carrier on which the first downlink signal is located and the first carrier whose frequency is a second frequency offset less than the center frequency of the carrier on which the first downlink signal is located, wherein the first frequency offset and the second frequency offset are frequency offsets between center frequencies of the first carriers and the center frequency of the carrier on which the first downlink signal is located, and values of the first frequency offset and the second frequency offset are the same; or the first terminal device has a capability of sending the uplink signal on the first carrier at the first frequency offset or the second frequency offset.

16. The method according to claim 15, wherein the values of the first frequency offset and the second frequency offset are less than or equal to a first threshold.

17. The method according to any one of claims 13 to 16, wherein the first carrier is the carrier that is located on the frequency band different from that of the carrier on which the first downlink signal is located, and that the first terminal device has a capability of sending an uplink signal on the first carrier comprises: the first terminal device has a capability of sending the uplink signal on the first carrier in an uplink frequency band of one or more frequency ranges, or the first terminal device has a capability of sending the uplink signal on the first carrier in a frequency band at one or more frequency spacings relative to a frequency band of the carrier on which the first downlink signal is located.

18. The method according to claim 17, wherein the frequency band on which the carrier of the first downlink signal is located and the frequency band on which the first carrier is located are two frequency bands of a frequency division duplexing frequency range.

19. The method according to any one of claims 13 to 18, wherein the first information is carried in a message Msg1 or Msg3 that is sent by the first terminal device in a random access process.

20. The method according to any one of claims 13 to 19, wherein the second information comprises at least one of the following:
a quantity of frequency domain locations occupied by the first uplink signal, a frequency offset between the first uplink signal and the first downlink signal, a frequency offset between the center frequency of the first carrier and the center frequency of the carrier on which the first downlink signal is located, or a bandwidth of the first uplink signal.

21. The method according to any one of claims 13 to 20, wherein the second information is carried in a paging message, Msg4 in a random access process, downlink control information DCI, a signal carrying a broadcast message, a preamble signal, a reference signal, or a calibration signal.

22. The method according to any one of claims 13 to 21, wherein the second information indicates a frequency domain location and a frequency domain bandwidth that are of the first uplink signal on the first carrier, and the second information comprises modulation and coding scheme MCS information and/or a quantity of frequency domain locations occupied by the first uplink signal, wherein
the quantity of frequency domain locations occupied by the first uplink signal is 1 or 2, and the MCS information is used by the first terminal device to determine a value of a frequency offset between the first frequency domain location and/or the second frequency domain location and the center frequency of the first downlink signal, and the bandwidth of the first uplink signal.

23. The method according to claim 22, wherein the MCS information comprises a value of a line code or spreading code factor of the first uplink signal, and/or a modulation symbol length of the first uplink signal.

24. The method according to claim 22 or 23, wherein the second information further indicates a frequency domain location of the first carrier, and the second information further comprises the frequency offset between the center frequency of the first carrier and the center frequency of the carrier on which the first downlink signal is located, wherein
the center frequency of the first carrier is a frequency that is in the frequency band of the carrier on which the first downlink signal is located and that is the first frequency offset greater than the center frequency of the carrier on which the first downlink signal is located or the second frequency offset less than the center frequency of the carrier on which the first downlink signal is located, or the center frequency of the first carrier is frequencies that are in the frequency band of the carrier on which the first downlink signal is located and that are the first frequency offset greater than the center frequency of the carrier on which the first downlink signal is located and the second frequency offset less than the center frequency of the carrier on which the first downlink signal is located, or the first carrier is located in an uplink frequency band of one or more frequency ranges; or the first carrier is located in a frequency band that is different from and that is one or more frequency spacings from the frequency band of the carrier on which the first downlink signal is located.

25. A network device, wherein the network device comprises a transceiver module and a processing module, wherein
the transceiver module is configured to receive first information from a first terminal device, wherein the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located;
the processing module is configured to determine second information based on the first information, wherein the second information indicates a frequency domain resource used by the first terminal device to send a first uplink signal, and the first uplink signal is a signal obtained through modulating the first downlink signal by the first terminal device, or the first uplink signal is a signal generated by the first terminal device; and
the transceiver module is further configured to send the second information to the first terminal device.

26. A first terminal device, wherein the first terminal device comprises a transceiver module, wherein
the transceiver module is configured to send first information to a network device, wherein the first information indicates that the first terminal device has a capability of sending an uplink signal on a first carrier, a center frequency of the uplink signal is different from a center frequency of a first downlink signal, and the first carrier is any one of the following carriers: a carrier on which the first downlink signal is located, a carrier that is on a same frequency band as a carrier on which the first downlink signal is located and whose center frequency is different from a center frequency of the carrier on which the first downlink signal is located, or a carrier that is located on a frequency band different from that of a carrier on which the first downlink signal is located; and
the transceiver module is further configured to receive second information from the network device, and send a first uplink signal to the network device on a frequency domain resource indicated by the second information, wherein the first uplink signal is a signal obtained through modulating the first downlink signal by the first terminal device, or the first uplink signal is a signal generated by the first terminal device.

27. A communication system, wherein the communication system comprises a network device and a first terminal device, the network device is configured to perform the communication method according to any one of claims 1 to 12, and the first terminal device is configured to perform the communication method according to any one of claims 13 to 24.

28. A communication apparatus, comprising a memory and a processor coupled to the memory, wherein the memory is configured to store a program, the processor is configured to execute the program stored in the memory, and when the communication apparatus runs, the processor runs the program, so that the communication apparatus performs the communication method according to any one of claims 1 to 12, or the communication apparatus performs the communication method according to any one of claims 13 to 24.

29. A computer-readable storage medium, wherein the computer-readable storage medium stores a computer program or instructions, and when the computer program or the instructions are run, the communication method according to any one of claims 1 to 12 is implemented, or the communication method according to any one of claims 13 to 24 is implemented.
